# EUROPEAN PATENT APPLICATION

(11) **EP 4 603 736 A1**
(43) Date of publication of application: **20.08.2025**
(21) Application number: 22962137.0
(22) Date of filing: 28.12.2022
(51) Int. Cl.: F16L 27/12

(54) **METHOD FOR ASSEMBLING EXPANSION PIPE JOINT, AND TEMPORARY FIXING STRUCTURE FOR LOCK RING**

(30) Priority: 11.10.2022 JP 2022163083
(71) Applicant: Waterworks Technology Development Organization Co., Ltd., Osaka-shi, Osaka 530-0001 (JP)
(72) Inventor: MAENISHI,Tamotsu, Osaka-shi, Osaka 530-0001 (JP); KATAOKA,Kenji, Osaka-shi, Osaka 530-0001 (JP)
(74) Representative: Meissner Bolte Partnerschaft mbB
(86) International application number: PCT/JP2022/048532
(87) International publication number: WO 2024/079920

(57) **Abstract**

Provided a method for assembling an expansion pipe joint (10), a first pipe body (1) and a second pipe body (2) inserted into the first pipe body (1) being connected in a manner as to be relatively movable within a certain range along an axial direction. The method includes: a temporary fixing step of fitting an assembled body (48) obtained by assembling a lock ring (4) with a diameter increased through elastic deformation to a temporary fixing jig (8) into the first pipe body (1) and holding the lock ring (4) with an increased diameter in a coaxial alignment with the first pipe body (1); and a mounting step of inserting the second pipe body (2) into the lock ring (4) with an increased diameter, removing the temporary fixing jig (8) from the lock ring (4) through the insertion movement of the second pipe body (2), and mounting the lock ring (4) on an outer peripheral surface of the second pipe body (2).

## Description

### TECHNICAL FIELD

The present invention relates to a method for assembling an expansion pipe joint and a temporary fixing structure for a lock ring used in the method.

### BACKGROUND ART

Patent Documents 1 and 2 each disclose an expansion pipe joint that can expand and contract. In such an expansion pipe joint, a first pipe body and a second pipe body inserted into the first pipe body are connected in a manner as to be relatively movable within a certain range along an axial direction. A lock ring (ring member) extending along a circumferential direction is mounted on an outer peripheral surface of the second pipe body. When the second pipe body moves relative to the first pipe body beyond the certain range in a detachment direction, the lock ring is engaged with an engaging portion provided inside the first pipe body, restricting relative movement and preventing detachment.

The lock ring has an outer diameter set larger than an inner diameter of the engaging portion to exhibit the above-described detachment-preventing function. Therefore, as disclosed in Patent Documents 1 and 2, the process of mounting the lock ring on the outer peripheral surface of the second pipe body is performed with the lock ring and the second pipe body placed inside the first pipe body.

Patent Document 1 proposes a method in which the lock ring is rotated with a tool to cause internal threads formed on an inner peripheral surface of the lock ring to mate with external threads formed on the outer peripheral surface of the second pipe body. Patent Document 2 proposes a method in which the lock ring is increased in diameter with a tool, and the lock ring with an increased diameter is fitted onto the second pipe body.

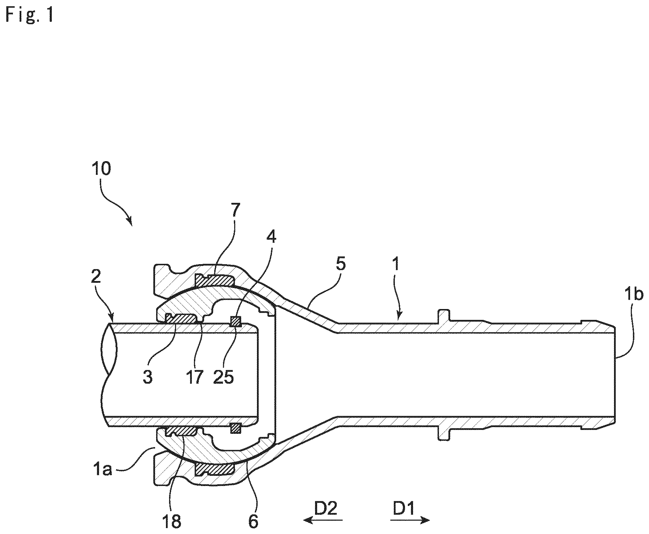

The above-described methods disclosed in Patent Documents 1 and 2 require a relatively complicated process, that is, a process of inserting the tool from an opening on a side of the first pipe body opposite to an opening into which the second pipe body is inserted, the openings corresponding to a pair of openings formed at both ends of the first pipe body, and operating the tool to rotate the lock ring or increase the diameter of the lock ring. Moreover, in a case where the opening into which the tool is inserted is formed at an end of an insertion opening (see FIG. 1, for example) extending in the axial direction and/or in a case where the pipe body has a small diameter (for example, a nominal diameter of 100 or less), the lock ring is operated with the tool inserted into a narrow space; therefore, it has been difficult to address with existing tools.

### PRIOR ART DOCUMENTS

### PATENT DOCUMENT

Patent Document 1: JP-A-H2-271192
Patent Document 2: JP-A-H10-54487

### SUMMARY OF THE INVENTION

### PROBLEMS TO BE SOLVED BY THE INVENTION

The present invention has been made in view of the above-described circumstances, and it is therefore an object of the present invention to provide a method for assembling an expansion pipe joint and a temporary fixing structure for a lock ring that can improve workability of mounting a lock ring.

### MEANS FOR SOLVING THE PROBLEMS

### Aspect [1]

The method for assembling an expansion pipe joint of the present invention is a method for assembling an expansion pipe joint, a first pipe body and a second pipe body inserted into the first pipe body being connected in a manner as to be relatively movable within a certain range along an axial direction, and a lock ring mounted on an outer peripheral surface of the second pipe body exhibiting a detachment-preventing function, the method comprising:
a temporary fixing step of fitting an assembled body obtained by assembling the lock ring with a diameter increased through elastic deformation to a temporary fixing jig into the first pipe body and holding the lock ring with an increased diameter in a coaxial alignment with the first pipe body; and
a mounting step of inserting the second pipe body into the lock ring with an increased diameter, removing the temporary fixing jig from the lock ring through the insertion movement of the second pipe body, and mounting the lock ring on the outer peripheral surface of the second pipe body.

According to such a method, the lock ring with an increased diameter is temporarily fixed inside the first pipe body in a coaxial alignment with the first pipe body, the second pipe body is inserted into the lock ring with an increased diameter, causing the lock ring to be mounted on the outer peripheral surface of the second pipe body. This eliminates the need for operating the lock ring with the tool inserted from an opening on a side of the first pipe body opposite to an opening into which the second pipe body is inserted, the openings corresponding to a pair of openings formed at both ends of the first pipe body, and the workability of mounting the lock ring can be improved accordingly.

### Aspect [2]

In the method for assembling an expansion pipe joint of the above aspect [1], it is preferable that, the lock ring includes a dividing portion that separates the lock ring in a circumferential direction, the temporary fixing jig includes a main body capable of being fitted into the first pipe body, and a first protrusion protruding from the main body, and in the temporary fixing step, the lock ring is held with an increased diameter by inserting the first protrusion into the dividing portion with a gap increased through elastic deformation. According to such a method, the lock ring with an increased diameter can be held in a predetermined position by using the temporary fixing jig having a simple configuration.

### Aspect [3]

In the method for assembling an expansion pipe joint of the above aspect [1] or [2], it is preferable that, the temporary fixing jig includes a main body capable of being fitted into the first pipe body, and a second protrusion protruding from the main body, and in the temporary fixing step, the lock ring is assembled to the temporary fixing jig with the lock ring in contact with the second protrusion. By bringing the lock ring into contact with the second protrusion, the second protrusion can be used for positioning when the lock ring is assembled to the temporary fixing jig. Further, the relative position of the lock ring assembled to the temporary fixing jig becomes stable, leading to an improvement of workability.

### Aspect [4]

In the method for assembling an expansion pipe joint of any one of the above aspects [1] to [3], it is preferable that, in the mounting step, with the lock ring engaged with an engaging portion provided inside the first pipe body in an insertion direction of the second pipe body, the temporary fixing jig is pressed by the second pipe body to be removed from the lock ring. According to such a method, the temporary fixing jig can be smoothly removed from the lock ring through the insertion movement of the second pipe body, leading to an improvement of workability.

### Aspect [5]

In the method for assembling an expansion pipe joint of any one of the above aspects [1] to [4], the first pipe body may include a casing having a spherical inner peripheral surface and an intermediate sleeve having a spherical outer peripheral surface fitted to the spherical inner peripheral surface in a relatively slidable manner, and in the temporary fixing step, the assembled body may be fitted into the intermediate sleeve. In this case, in an assembly of an expansion pipe joint (flexible expansion pipe joint) that can not only expand and contract but also bend, the workability of mounting the lock ring can be improved. Further, before the intermediate sleeve is fitted to the casing, the assembled body can be fitted into the intermediate sleeve in advance, and the workability can be improved accordingly.

### Aspect [6]

In the method for assembling an expansion pipe joint of the above aspect [5], it is preferable that, the intermediate sleeve is provided with a notch that allows passage of the lock ring with a radial direction of the lock ring aligned with an axial direction of the intermediate sleeve, and in the temporary fixing step, the temporary fixing jig is fitted into the notch. According to such a method, the assembled body can be fitted into the intermediate sleeve using the notch provided on the intermediate sleeve.

### Aspect [7]

The temporary fixing structure for a lock ring of the present invention is a temporary fixing structure for a lock ring, the temporary fixing structure being used to assemble an expansion pipe joint, a first pipe body and a second pipe body inserted into the first pipe body being connected in a manner as to be relatively movable within a certain range along an axial direction, and a lock ring mounted on an outer peripheral surface of the second pipe body exhibiting a detachment-preventing function, wherein
an assembled body obtained by assembling the lock ring with a diameter increased through elastic deformation to a temporary fixing jig is fitted into the first pipe body, and the lock ring with an increased diameter is held in a coaxial alignment with the first pipe body; and
when the second pipe body is inserted into the lock ring with an increased diameter, the temporary fixing jig is removed from the lock ring through the insertion movement of the second pipe body, and the lock ring is mounted on the outer peripheral surface of the second pipe body.

According to such a structure, the lock ring with an increased diameter is temporarily fixed inside the first pipe body in a coaxial alignment with the first pipe body, the second pipe body is inserted into the lock ring with an increased diameter, causing the lock ring to be mounted on the outer peripheral surface of the second pipe body. This eliminates the need for operating the lock ring with the tool inserted from an opening on a side of the first pipe body opposite to an opening into which the second pipe body is inserted, the openings corresponding to a pair of openings formed at both ends of the first pipe body, and the workability of mounting the lock ring can be improved accordingly.

### Aspect [8]

**In** the temporary fixing structure for a lock ring of the above aspect [7], it is preferable that, the lock ring includes a dividing portion that separates the lock ring in a circumferential direction, the temporary fixing jig includes a main body capable of being fitted into the first pipe body, and a first protrusion protruding from the main body, and the lock ring is held with an increased diameter by inserting the first protrusion into the dividing portion with a gap increased through elastic deformation. According to such a structure, the lock ring with an increased diameter can be held in a predetermined position by using the temporary fixing jig having a simple configuration.

### Aspect [9]

**In** the temporary fixing structure for a lock ring of the above aspect [7] or [8], it is preferable that, the temporary fixing jig includes a main body capable of being fitted into the first pipe body, and a second protrusion protruding from the main body, and the lock ring is assembled to the temporary fixing jig with the lock ring in contact with the second protrusion. By bringing the lock ring into contact with the second protrusion, the second protrusion can be used for positioning when the lock ring is assembled to the temporary fixing jig. Further, the relative position of the lock ring assembled to the temporary fixing jig becomes stable, leading to an improvement of workability.

### Aspect [10]

In the temporary fixing structure for a lock ring of any one of the above aspects [7] to [9], it is preferable that, an engaging portion is provided inside the first pipe body, the engaging portion facing the lock ring with an increased diameter in an insertion direction of the second pipe body. According to such a structure, the temporary fixing jig can be smoothly removed from the lock ring through the insertion movement of the second pipe body, leading to an improvement of workability.

### Aspect [11]

In the temporary fixing structure for a lock ring of any one of the above aspects [7] to [10], the first pipe body may include a casing having a spherical inner peripheral surface and an intermediate sleeve having a spherical outer peripheral surface fitted to the spherical inner peripheral surface in a relatively slidable manner, and the assembled body may be fitted into the intermediate sleeve. In this case, in an assembly of an expansion pipe joint (flexible expansion pipe joint) that can not only expand and contract but also bend, the workability of mounting the lock ring can be improved. Further, before the intermediate sleeve is fitted to the casing, the assembled body can be fitted into the intermediate sleeve in advance, and the workability can be improved accordingly.

### Aspect [12]

In the temporary fixing structure for a lock ring of the above aspect [11], it is preferable that, the intermediate sleeve is provided with a notch that allows passage of the lock ring with a radial direction of the lock ring aligned with an axial direction of the intermediate sleeve, and the temporary fixing jig is fitted into the notch. According to such a structure, the assembled body can be fitted into the intermediate sleeve using the notch provided on the intermediate sleeve.

### BRIEF DESCRIPTION OF THE DRAWINGS

FIG. 1 is a cross-sectional view of an example of a configuration of an expansion pipe joint.
FIG. 2(A) is a front view of a lock ring in a free state, and FIG. 2(B) is a cross-sectional view taken along line A-A.
FIG. 3 is a diagram for describing inconvenience in assembling the expansion pipe joint under a conventional method.
FIG. 4 is a cross-sectional view for describing a temporary fixing step.
FIG. 5 is a cross-sectional view for describing a mounting step.
FIG. 6 is a cross-sectional view illustrating a process of fitting an assembled body into an intermediate sleeve.
FIG. 7(A) is a rear view of the intermediate sleeve, and FIG. 7(B) is a cross-sectional view taken along
   line B-B.
FIG. 8(A) is a front view of a temporary fixing jig, and FIG. 8(B) is a side view of the temporary fixing jig.
FIG. 9 is a front view of the assembled body.
FIG. 10 is a front view of a modification of the temporary fixing jig.
FIG. 11(A) is an exploded front view of a main body illustrated in FIG. 10, and FIG. 11(B) is an exploded side view of the main body.
FIG. 12 is a cross-sectional view of another embodiment of the expansion pipe joint.
FIG. 13 is a cross-sectional view of still another embodiment of the expansion pipe joint.
FIG. 14 is a longitudinal sectional view of the expansion pipe joint in a normal state.
FIG. 15 is a longitudinal sectional view of the expansion pipe joint in a minimum contracted state.
FIG. 16 is a longitudinal sectional view of the expansion pipe joint in a maximum extension state.
FIG. 17(A) is a longitudinal sectional view of a second sleeve,
   FIG. 17(B) is a view taken along line B-B in FIG. 17(A) in an arrow direction, and FIG. 17(C) is a view illustrating a third lock ring.
FIG. 18(A) is a cross-sectional view taken along line V(A)-V(A) in FIG. 17(B), and FIG. 18(B) is a cross-sectional view taken along line V(B)-V(B) in FIG. 17(B).
FIG. 19 is a perspective view illustrating a fitting groove portion and an insertion groove portion of the seal member installing portion.
FIG. 20(A) is a view illustrating an operation in an insertion step in a first step, and FIG. 20(B) is a view illustrating an operation in an attitude changing step in the first step.
FIG. 21(A) is a view illustrating an operation in a third step, and FIG. 21(B) is a view illustrating a third lock ring and an attachment tool.
FIG. 22(A) is a view illustrating an operation in a lock ring insertion step in a fourth step, and FIG. 22(B) is a view illustrating an operation in an inner joint body mounting step in the fourth step.
FIG. 23(A) is a view illustrating an operation in a sleeve insertion step of the fourth step, and FIG. 23(B) is a view illustrating an operation in a lock ring mounting step of the fourth step.
FIG. 24(A) is a view illustrating a state in which a second connection step of a fourth step is performed, and FIG. 24(B) is a view illustrating a state in which a first connection step of the fourth step is performed.

### MODE FOR CARRYING OUT THE INVENTION

Embodiments of a method for assembling an expansion pipe joint and a temporary fixing structure for a lock ring according to the present invention will be described.

### Configuration of expansion pipe joint

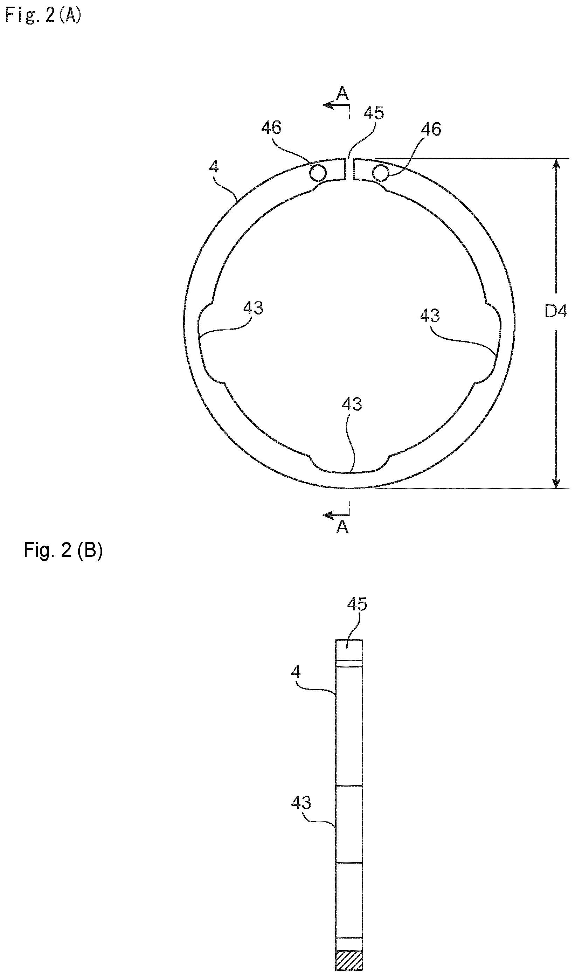

A configuration of the expansion pipe joint will be described with reference to FIGS. 1 and 2. An expansion pipe joint 10 illustrated in FIG. 1 includes a pipe body 1 (first pipe body), a pipe body 2 (second pipe body) inserted into the pipe body 1, and an annular gasket 3 that seals between the pipe body 1 and the pipe body 2. The pipe body 1 and the pipe body 2 are connected in a manner as to be relatively movable within a certain range along an axial direction (left-right direction in FIG. 1). In the present embodiment, an example where the pipe body 1 and the pipe body 2 are cast iron pipes with a nominal diameter of 75 used for water supply will be described. Note that the pipe bodies 1 and 2 may be fluid pipes used for liquids other than water, gases, gas-liquid mixtures, and the like. Further, specifications such as pipe dimensions can be appropriately changed according to use conditions.

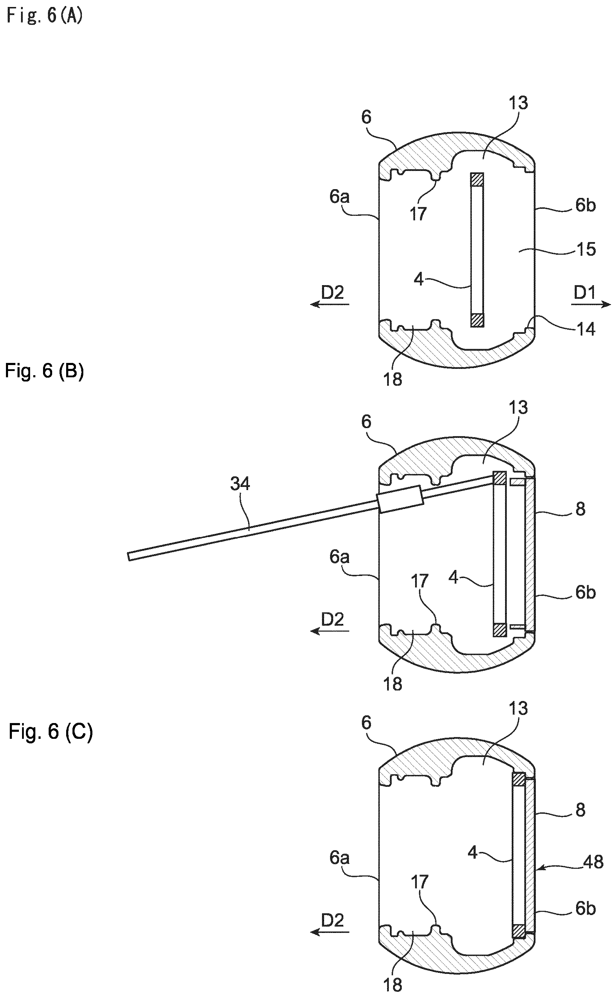

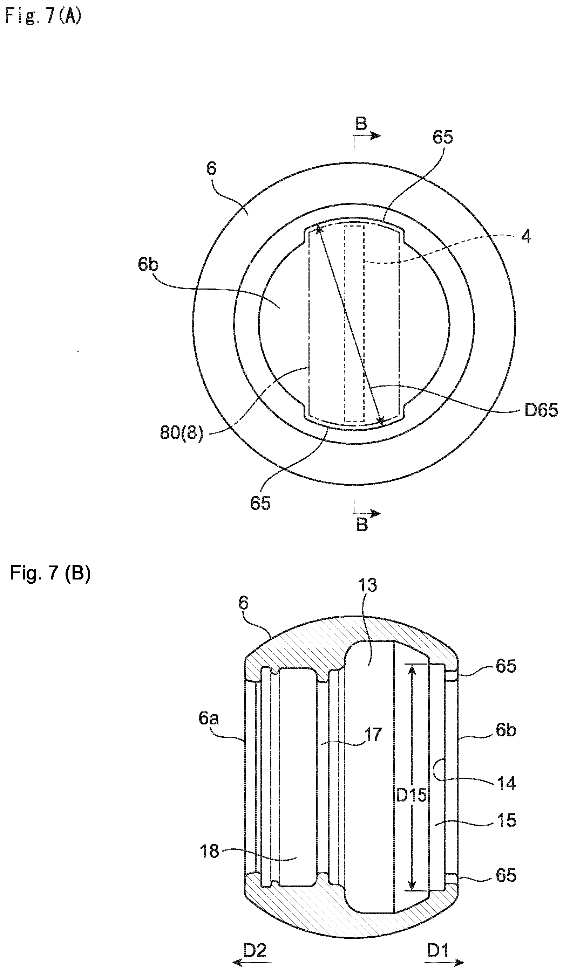

The pipe body 1 has a pair of openings 1a and 1b formed at both ends. The opening 1a is formed at an end of a reception opening of the pipe body 1. The opening 1b is formed at an end of an insertion end of the pipe body 1 extending in the axial direction. The pipe body 2 is inserted into the pipe body 1 through the opening 1a. The opening 1a includes an opening 6a (see FIGS. 6 and 7) of an intermediate sleeve 6 to be described later. An insertion direction D1 is a direction in which the pipe body 2 is inserted into the pipe body 1, and corresponds to the right direction in FIG. 1. A detachment direction D2 is a direction in which the pipe body 2 is detached from the pipe body 1, and corresponds to the left direction in FIG. 1. Further, a view from the insertion direction D1 is considered a front view, and a view from the detachment direction D2 is considered a rear view.

A lock ring 4 is mounted on an outer peripheral surface of the pipe body 2. The lock ring 4 extends along a circumferential direction around the axis. The lock ring 4 is made of metal, such as steel. An annular groove 25 on which the lock ring 4 is mounted is formed on the outer peripheral surface of the pipe body 2. The lock ring 4 is fitted into the annular groove 25 to become stationary relative to the pipe body 2. The annular groove 25 is formed at a position away from an end of the pipe body 2 in the detachment direction D2. A depth of the annular groove 25 is smaller than a thickness of the lock ring 4, so that the lock ring 4 is be mounted and fixed in a protruding state from the annular groove 25.

As illustrated in FIG. 2, the lock ring 4 includes a dividing portion 45 that separates the lock ring 4 in the circumferential direction. **In** the present embodiment, the lock ring 4 is formed by a C-shaped ring member, and includes the dividing portion 45 provided at one location in the circumferential direction. An inner diameter of the lock ring 4 in a free state without external force applied is smaller than an outer diameter of the pipe body 2.

Therefore, when fitting the lock ring 4 onto the pipe body 2, a gap of the dividing portion 45 is increased through elastic deformation to increase the diameter of the lock ring 4. Insertion holes 46 are provided at a pair of ends between which the dividing portion 45 is interposed. A tool 34 (see FIG. 6(B)) for increasing the diameter of the lock ring 4 is inserted into the insertion holes 46.

A notch 43 is provided on an inner peripheral surface of the lock ring 4 so as to allow a smooth increase in the diameter of the lock ring 4 through elastic deformation. The notch 43 is formed to partially reduce the thickness of the lock ring 4. The notch 43 extends in the circumferential direction over a predetermined angle range, and has both ends of the inner surface curved in an arc shape. The notch 43 is formed at a plurality of locations (three locations in the present embodiment) in the circumferential direction. The smaller the diameter of the lock ring 4, the greater the force applied to increase the diameter of the lock ring 4; therefore, the shape of the lock ring 4 including such a notch 43 is particularly useful when the pipe body 2 has a small diameter (for example, a nominal diameter of 100 or less).

The expansion pipe joint 10 exhibits a detachment-preventing function with the lock ring 4 mounted on the outer peripheral surface of the pipe body 2. When the pipe body 2 moves relative to the pipe body 1 beyond a certain range in the detachment direction, the lock ring 4 is engaged with an engaging portion 17 formed inside the pipe body 1, restricting relative movement and preventing detachment.

The engaging portion 17 is formed by an annular wall portion defining a mounting groove 18 on which the gasket 3 is mounted, and protrudes toward the inner peripheral side. An inner diameter of the engaging portion 17 (annular wall portion) is larger than the outer diameter of the pipe body 2 and smaller than an outer diameter of the lock ring 4 mounted on the outer peripheral surface of the pipe body 2.

In the present embodiment, an example where the expansion pipe joint 10 is an expansion pipe joint (flexible expansion pipe joint) that can not only expand and contract but also bend will be described. The pipe body 1 includes a casing 5 having a spherical inner peripheral surface, the intermediate sleeve 6 having a spherical outer peripheral surface fitted to the spherical inner peripheral surface of the casing 5 in a relatively slidable manner, and an annular gasket 7 that seals between the casing 5 and the intermediate sleeve 6.

The expansion pipe joint 10 expands or contracts freely by sliding between the intermediate sleeve 6 and the pipe body 2, and bends freely by sliding between the casing 5 and the intermediate sleeve 6. Note that, as with the following modification, the expansion pipe joint to which the present invention is applied is not limited to bendable expansion pipe joints.

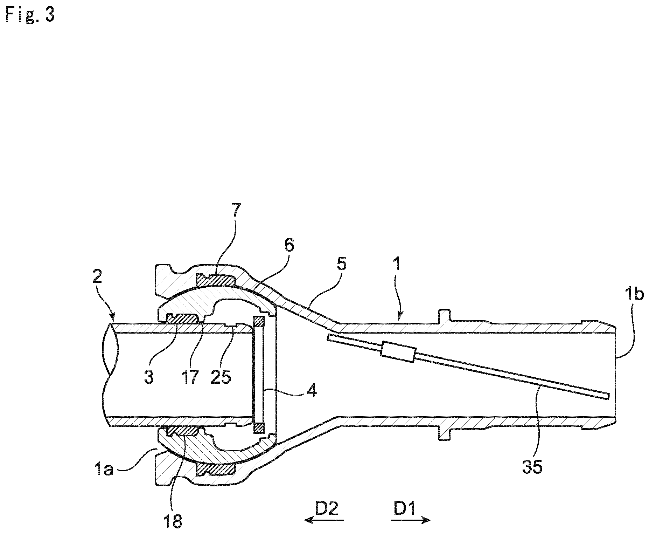

The process of mounting the lock ring 4 on the outer peripheral surface of the pipe body 2 needs to be performed with the lock ring 4 and the portion of the pipe body 2 on which the lock ring 4 is mounted placed inside the pipe body 1. According to the method disclosed in Patent Document 2, it is, however, necessary to operate the lock ring 4 with the tool 35 inserted from the opening 1b as illustrated in FIG. 3, making the process complicated. In particular, when the opening 1b is formed at the end of the insertion opening, or the pipe body 1 has a small diameter, it becomes extremely difficult to operate the lock ring 4 with the tool 35 inserted into a narrow space. Therefore, in the present embodiment, to facilitate the mounting of the lock ring 4, the expansion pipe joint 10 is assembled using the method to be described below.

### Method for assembling expansion pipe joint

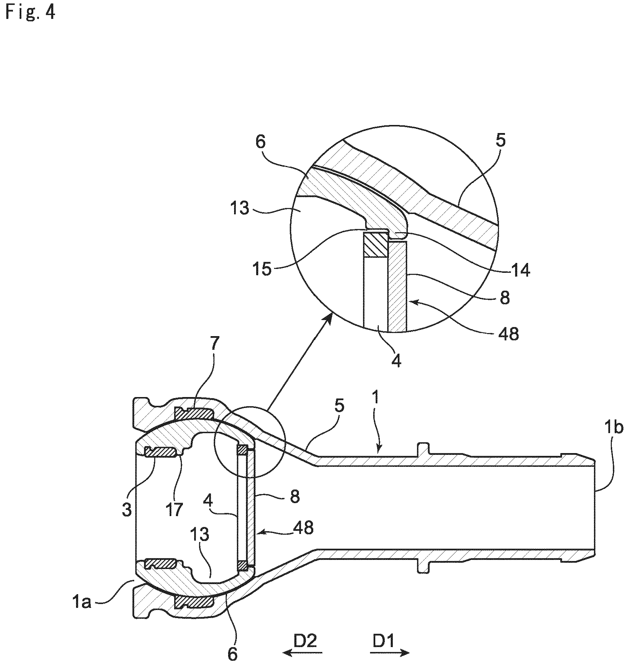

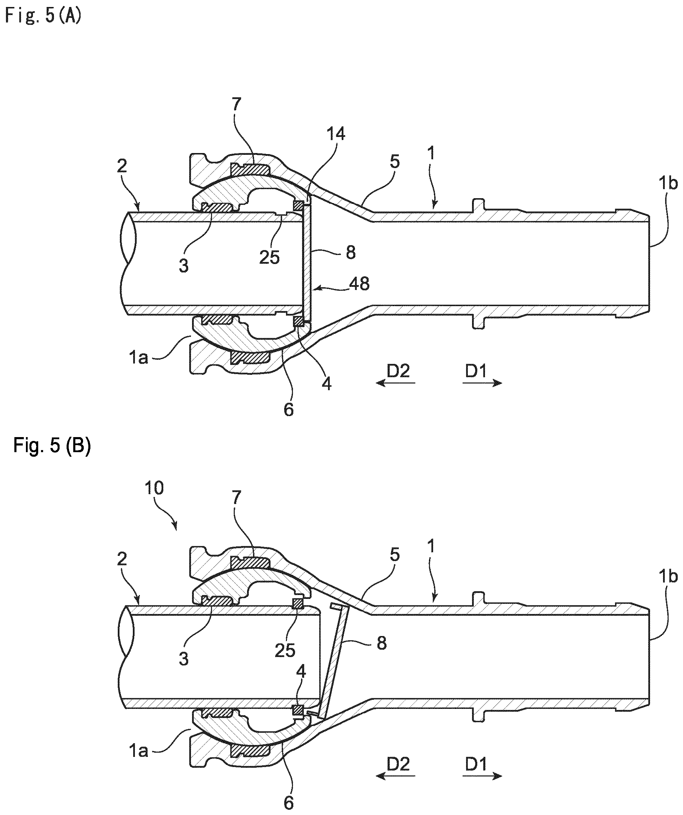

A method for assembling the expansion pipe joint 10 will be described with reference to FIGS. 4 to 9. The method for assembling the expansion pipe joint 10 according to the present embodiment includes: a temporary fixing step (see FIG. 4) of fitting an assembled body 48 obtained by assembling the lock ring 4 with in diameter increased through elastic deformation to a temporary fixing jig 8 into the pipe body 1 and holding the lock ring 4 with an increased diameter in a coaxial alignment with the pipe body 1; and a mounting step (see FIG. 5) of inserting the pipe body 2 into the lock ring 4 with an increased diameter, removing the temporary fixing jig 8 from the lock ring 4 through insertion movement of the pipe body 2, and mounting the lock ring 4 on the outer peripheral surface of the pipe body 2.

According to this method, as illustrated in FIG. 4, the lock ring 4 with an increased diameter is temporarily fixed inside the pipe body 1 in a coaxial alignment with the pipe body 1. Then, as illustrated in FIG. 5, inserting the pipe body 2 into the lock ring 4 with an increased diameter causes the lock ring 4 to be mounted on the outer peripheral surface of the tube body 2. This eliminates the need for inserting the tool from the opening 1b of the pipe body 1 and operating the lock ring 4.

Therefore, whether the opening 1b is formed at the end of the insertion opening or the pipe body 1 has a small diameter, the above-described inconvenience does not occur. It is therefore possible to improve the workability of mounting the lock ring 4. When the pipe body 1 has a small diameter (for example, a nominal diameter is 100 or less), such an improvement effect is particularly noticeable.

**In** this assembling method, the temporary fixing jig 8 is used to temporarily fix the lock ring 4 with an increased diameter. The temporary fixing jig 8 is capable of being fitted into the pipe body 1. Further, the temporary fixing jig 8 is capable of holding the lock ring 4 with an increased diameter in a coaxial alignment with the pipe body 1 with the temporary fixing jig 8 fitted into the pipe body 1. Here, "fitted into" refers to fitted inside the mating member (the pipe body 1 in the present embodiment), and a gap may be provided therebetween. As illustrated in FIG. 5(B), the temporary fixing jig 8 is removed from the lock ring 4 in the mounting step, and then collected.

In the present embodiment, the pipe body 1 includes the casing 5 and the intermediate sleeve 6, and the assembled body 48 is fitted into the intermediate sleeve 6 of the pipe body 1 as illustrated in FIG. 4. Therefore, as illustrated in FIG. 6, before the intermediate sleeve 6 is fitted to the casing 5, the assembled body 48 can be fitted into the intermediate sleeve 6 in advance. By fitting the intermediate sleeve 6 into which the assembled body 48 (see FIG. 6(C)) is fitted to the casing 5, it is possible to obtain the pipe body 1 into which the assembled body 48 is fitted as illustrated in FIG. 4. This method improves the workability as compared with a case where the casing 5 is fitted to the intermediate sleeve 6, and then the assembled body 48 is fitted into the intermediate sleeve 6.

In order to fit the assembled body 48 into the intermediate sleeve 6, the lock ring 4 is first placed inside the intermediate sleeve 6 as illustrated in FIG. 6(A). The lock ring 4 is placed in an annular groove 13 formed on the insertion direction D1 side of the engaging portion 17. An inner diameter of the annular groove 13 is set larger than the outer diameter of the lock ring 4. As described above, since the inner diameter of the engaging portion 17 is smaller than the outer diameter of the lock ring 4, the lock ring 4 is inserted into the intermediate sleeve 6 from the opening 6b located on the insertion direction D1 side, of the pair of openings 6a and 6b formed at both ends of the intermediate sleeve 6.

As illustrated in FIG. 7, the opening 6b of the intermediate sleeve 6 is provided with a notch 65 that partially increases the diameter of the opening 6b. A diameter D65 at the notch 65 is set greater than or equal to an outer diameter D4 (see FIG. 2) of the lock ring 4. Therefore, the intermediate sleeve 6 is formed with the notch 65 that allows passage of the lock ring 4 with the radial direction of the lock ring 4 aligned with the axial direction of the intermediate sleeve 6 (see the dashed line in FIG. 7(A)). After the lock ring 4 is passed through the notch 65 and placed inside the intermediate sleeve 6, the lock ring 4 can be turned in the annular groove 13 to align coaxially with the intermediate sleeve 6 as illustrated in FIG. 6(A).

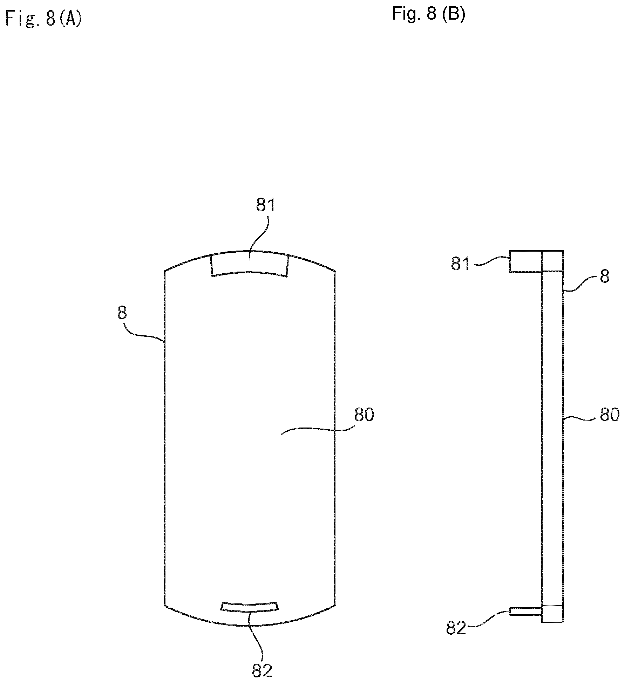

Next, as illustrated in FIG. 6(B), the temporary fixing jig 8 is attached to the intermediate sleeve 6. In the present embodiment, the temporary fixing jig 8 is attached at a position on the insertion direction D1 side of the annular groove 13, more specifically, at the opening 6b on the insertion direction D1 side of the intermediate sleeve 6. As illustrated in FIG. 8, the temporary fixing jig 8 includes a main body 80 capable of being fitted into the intermediate sleeve 6 (and thus into the pipe body 1). The main body 80 is formed in a plate shape, but is not limited to such a shape. The main body 80 has a shape that can be fitted into the notch 65 (see a one-dot chain line in FIG. 7 (A)). This restricts movement of the temporary fixing jig 8 around the axis.

In the present embodiment, the temporary fixing jig 8 includes a protrusion 81 (first protrusion) protruding from the main body 80. The temporary fixing jig 8 further includes a protrusion 82 (second protrusion) protruding from the main body 80. The protrusions 81 and 82 each protrude in the detachment direction D2, and is set at a radial position that can face the lock ring 4 assembled to the temporary fixing jig 8. The protrusions 81 and 82 are each formed in an arc shape extending along the circumferential direction, but is not limited to such a shape. Further, the temporary fixing jig 8 is made of resin such as Duracon (registered trademark), but is not limited to such a material.

Subsequently, as illustrated in FIGS. 6(B) and 6(C), the lock ring 4 with a diameter increased through elastic deformation is assembled to the temporary fixing jig 8, and the assembled body 48 is fitted into the intermediate sleeve 6. The lock ring 4 is assembled adjacent to the detachment direction D2 side of the temporary fixing jig 8. The locking ring 4 can be increased in diameter by means of the tool 34.

As the tool 34, an existing tool such as snap ring pliers can be used, and the tips of the tool are inserted into the insertion holes 46 (see FIG. 2). Since the operation of the tool 34 to increase the diameter of the lock ring 4 is not performed through the opening 1b of the pipe body 1, the workability is not particularly deteriorated.

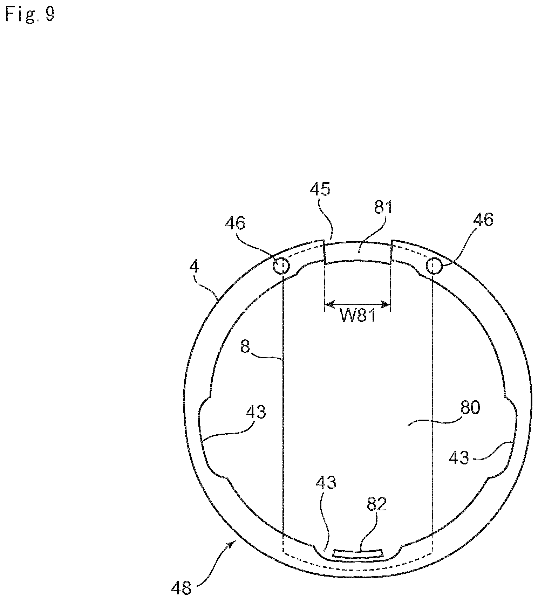

**In** the temporary fixing step, as illustrated in FIG. 9, inserting the protrusion 81 into the dividing portion 45 with a gap increased through elastic deformation causes the lock ring 4 to be held with an increased diameter. It is therefore possible to hold the lock ring 4 with an increased diameter in a predetermined position by using the temporary fixing jig 8 having a simple configuration.

Further, the lock ring 4 with an increased diameter only needs to be adjacent to the temporary fixing jig 8, which offers excellent workability. The lock ring 4 is held with an increased diameter such that its inner diameter becomes larger than the outer diameter of the pipe body 2. A width W81 of the protrusion 81 is larger than or equal to the gap of the dividing portion 45 required to maintain the above-described inner diameter of the lock ring 4.

In the present embodiment, in the temporary fixing step, as illustrated in FIG. 9, the lock ring 4 is assembled to the temporary fixing jig 8 with the lock ring 4 in contact with the protrusion 82. By bringing the lock ring 4 into contact with the protrusion 82, the protrusion 82 can be used for positioning when the lock ring 4 is assembled to the temporary fixing jig 8. Further, the relative position of the lock ring 4 assembled to the temporary fixing jig 8 becomes stable, leading to an improvement of workability. Here, the "in contact with" refers to a state of being positioned in contact with the mating member (the protrusion 82 in the present embodiment) or a state of being positioned almost in contact with the mating member with a minute gap.

In the present embodiment, a portion of the inner peripheral surface of the lock ring 4 facing the dividing portion 45 across the center of the lock ring 4 is in contact with the protrusion 82. When the lock ring 4 with an increased diameter supported by the tool 34 is assembled to the temporary fixing jig 8 (see FIG. 6(B)), an initial position of the lock ring 4 with respect to the temporary fixing jig 8 is determined by bringing the lock ring 4 into contact with the protrusion 82, which leads to an improvement of workability. Further, in this example, since the notch 43 recessed along the radial direction is in contact with the protrusion 82, it is possible to prevent positional displacement of the lock ring 4 along the circumferential direction relative to the temporary fixing jig 8.

After the assembled body 48 is fitted into the intermediate sleeve 6 as illustrated in FIG. 6(C), the intermediate sleeve 6 is fitted to the casing 5 with the gasket 7 mounted. Although not illustrated in the drawings, an opening on the detachment direction D2 side of the casing 5 is formed with a notch that allows passage of the intermediate sleeve 6 with the radial direction of the intermediate sleeve 6 aligned with the axial direction of the casing 5. After the intermediate sleeve 6 is passed through the notch and placed inside the casing 5, the intermediate sleeve 6 can be turned to align coaxially with the casing 5 as illustrated in FIG. 4. A lubricant may be applied between the inner peripheral surface of the gasket 7 and the outer peripheral surface of the intermediate sleeve 6 to allow the intermediate sleeve 6 to turn smoothly.

The intermediate sleeve 6 is fitted to the casing 5 as described above, and the gasket 3 is mounted on the intermediate sleeve 6, as a result of which the pipe body 1 in which the assembled body 48 is fitted as illustrated in FIG. 4 is obtained. The gasket 3 may be mounted on the intermediate sleeve 6 before the intermediate sleeve 6 is fitted to the casing 5. The temporary fixing jig 8 of the assembled body 48 fitted in the pipe body 1 is positioned where the temporary fixing jig 8 can interfere with the pipe body 2 when the pipe body 2 is inserted into the lock ring 4 with an increased diameter. In the present embodiment, as illustrated in FIG. 9, (the main body 80 of) the temporary fixing jig 8 is placed to traverse or cross the lock ring 4 in the assembled body 48 as viewed from the insertion direction D1.

As illustrated in FIGS. 4 and 7, an engaging portion 14 is formed inside the pipe body 1 in which the lock ring 4 with an increased diameter faces the insertion direction D1 of the pipe body 2. The engaging portion 14 is formed by an annular wall portion forming the opening (the opening 6b of the intermediate sleeve 6) to which the temporary fixing jig 8 is attached, and protrudes toward the inner peripheral side. An allowable space 15 where the lock ring 4 with an increased diameter can be placed is formed adjacent to the detachment direction D2 side of the engaging portion 14 (annular wall portion). A diameter D15 of the allowable space 15 is set larger than the diameter D65 at the notch 65 and larger than or equal to the outer diameter of the lock ring 4 with an increased diameter.

After the lock ring 4 is temporarily fixed by the temporary fixing step, the pipe body 2 is inserted into the pipe body 1 as illustrated in FIG. 5. Since the lock ring 4 with an increased diameter is held inside the pipe body 1 in a coaxial alignment with the pipe body 1, the pipe body 2 inserted into the pipe body 1 is automatically inserted into the lock ring 4. The axis of the lock ring 4 temporarily fixed inside the pipe body 1 need not be strictly aligned with the axis of the pipe body 1, and may be substantially aligned to the extent that when the pipe body 2 is inserted into the pipe body 1 as described above, the pipe body 2 is inserted into the lock ring 4.

In the present embodiment, in the mounting step, with the lock ring 4 engaged with the engaging portion 14 formed inside the pipe body 1 in the insertion direction D1 of the pipe body 2, the temporary fixing jig 8 is pressed by the pipe body 2 to be removed from the lock ring 4. This allows the temporary fixing jig 8 to be smoothly removed from the lock ring 4 through the insertion movement of the pipe body 2, leading to an improvement of workability. The lock ring 4 from which the temporary fixing jig 8 has been removed is reduced in diameter due to restoration of elastic deformation and is mounted on the outer peripheral surface of the pipe body 2. After confirming that the lock ring 4 is fitted into the annular groove 25 and collecting the temporary fixing jig 8, the expansion pipe joint 10 illustrated in FIG. 1 is obtained.

### Temporary fixing structure of lock ring

As already shown in the description of the assembling method, the temporary fixing structure of the lock ring 4 will be described briefly. As illustrated in FIG. 4, in the temporary fixing structure of the present embodiment, the assembled body 48 obtained by assembling the lock ring 4 with a diameter increased through elastic deformation to the temporary fixing jig 8 is fitted into the pipe body 1, and the lock ring 4 with an increased diameter is held in a coaxial alignment with the pipe body 1. As illustrated in FIG. 5, the temporary fixing structure is configured that, when the pipe body 2 is inserted into the lock ring 4 with an increased diameter, the temporary fixing jig 8 is removed from the lock ring 4 through the insertion movement of the pipe body 2, and the lock ring 4 is mounted on the outer peripheral surface of the pipe body 2.

As illustrated in FIGS. 4 and 9, in the temporary fixing structure of the present embodiment, inserting the protrusion 81 into the dividing portion 45 with a gap increased through elastic deformation causes the lock ring 4 to be held with an increased diameter. Further, the lock ring 4 is assembled to the temporary fixing jig 8 with the lock ring 4 in contact with the protrusion 82. The engaging portion 14 is formed inside the pipe body 1 in which the lock ring 4 with an increased diameter faces the insertion direction D1 of the pipe body 2. Therefore, with the lock ring 4 engaged with the engaging portion 14 in the insertion direction D1 of the pipe body 2, the temporary fixing jig 8 can be pressed by the pipe body 2 to be removed from the lock ring 4.

### Other Embodiments

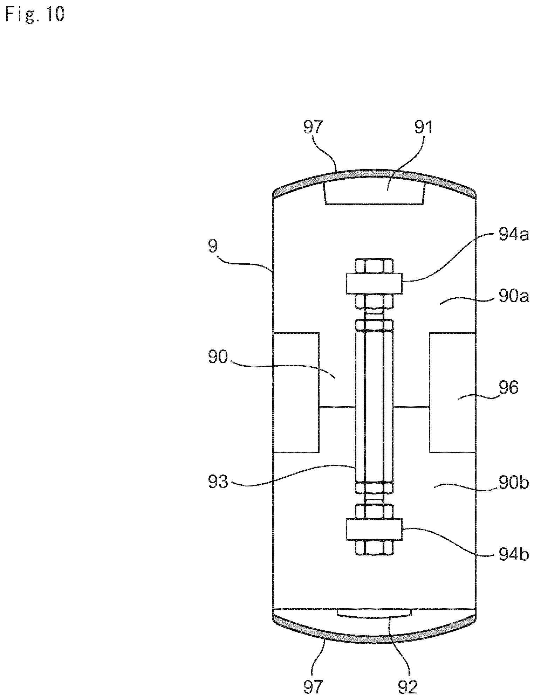

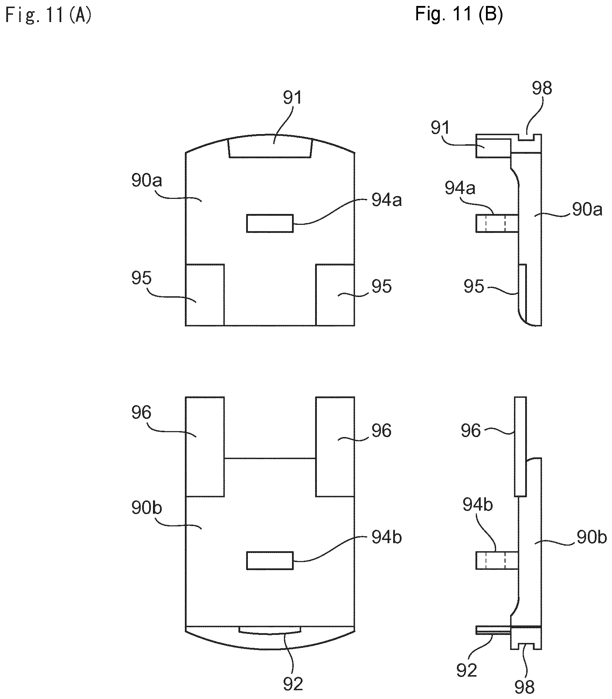

A modification of the temporary fixing jig will be described with reference to FIGS. 10 and 11. A temporary fixing jig 9 illustrated in FIG. 10 can be configured in a similar manner to the temporary fixing jig 8 described above, except for the configuration described below; therefore, the description of common points will be omitted, and differences will be mainly described. The temporary fixing jig 9 includes a main body 90 capable of being fitted into the pipe body 1, and protrusions 91 and 92 protruding from the main body 90. Such portions have the same functions as the main body 80, the protrusion 81, and the protrusion 82 included in the temporary fixing jig 8. The temporary fixing jig 9 is made of metal such as steel, but is not limited to such a material.

When (the intermediate sleeve 6 of) the pipe body 1 is formed by casting, a dimension such as the inner diameter of the pipe body 1 tends to vary relatively largely; therefore, there is a risk that the temporary fixing jig 9 (or assembled body) fitted in the pipe body 1 may shake or may fall off from the temporarily fixed position. In view of such circumstances, the temporary fixing jig 9 is adjustable in length along the radial direction (vertical direction in FIG. 10). Such a configuration can make, by adjusting the length of the temporary fixing jig 9 to match the dimension of the pipe body 1, the temporary fixing jig 9 (or the assembled body) fitted in the pipe body 1 stable, allowing a further improvement of workability.

The temporary fixing jig 9 includes a turnbuckle 93 as a length adjusting member and a pair of support portions 94a and 94b that support the turnbuckle 93. The main body 90 includes a plurality of segments including a segment 90a on which the support portion 94a is formed and a segment 90b on which the support portion 94b is formed. As illustrated in FIG. 11, complementary fitting recessed and protruding portions provided between the segment 90a and the segment 90b, and are slidable relatively along the radial direction. The recessed and protruding portions include a recessed portion 95 formed on the segment 90a and the protruding portion 96 formed on the segment 90b, but the recess and protrusion relationship may be reversed.

The temporary fixing jig 9 includes an elastic member 97 mounted on the outer peripheral portion thereof. Interposing the elastic member 97 between the pipe body 1 and the temporary fixing jig 9 allows the temporary fixing jig 9 to be internally fitted with the temporary fixing jig 9 well-fitted to the pipe body 1. The elastic member 97 is made of rubber such as ethylene propylene rubber (EPDM).

The elastic member 97 may be made of a sponge material obtained by foaming rubber or synthetic resin. A mounting groove 98 in which the elastic member 97 is mounted is formed on an outer peripheral portion of the main body 90. It is also possible to apply only one of the length adjusting mechanism or the elastic member 97 as described above.

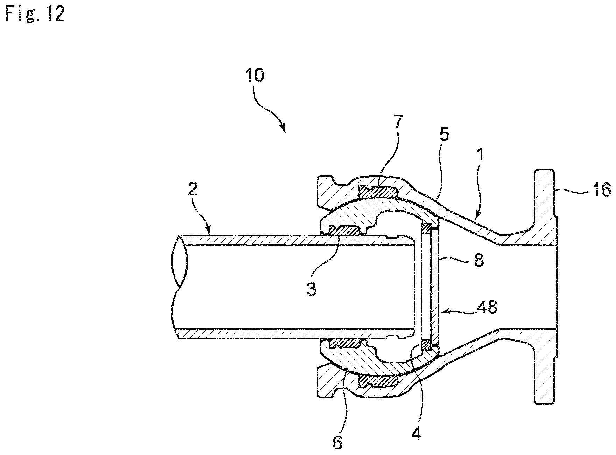

In the embodiments described above, the example where (the casing 5 of) the pipe body 1 has the insertion opening extending in the axial direction has been described, but the present invention is not limited to such an example, and for example, the pipe body 1 may be of a type having a flange 16 as illustrated in FIG. 12. Even such a type allows the lock ring 4 to be mounted on the outer peripheral surface of the pipe body 2 in the manner described above.

However, when the pipe body 1 has the insertion opening extending in the axial direction, the effect of improving the workability of mounting the lock ring 4 is particularly noticeable. As described above, the configuration where the pipe body 1 has such an insertion opening causes various inconveniences such as the tool 35 not reaching the lock ring 4 (see FIG. 3), and tends to deteriorate workability.

In the embodiments described above, when the temporary fixing step or the mounting step is performed, the axial direction of the pipe body 1 is typically oriented horizontally. However, the axial direction is not limited to such an orientation, and for example, the axial direction of the pipe body 1 may be oriented vertically to make the opening 1a face upward. When the pipe body 1 has a small diameter, the pipe body 1 is not so heavy, so that it is not difficult to work in such a vertical orientation. Further, since the engaging portion 14 is formed inside the pipe body 1, the assembled body 48 is prevented from falling off from the temporarily fixed position.

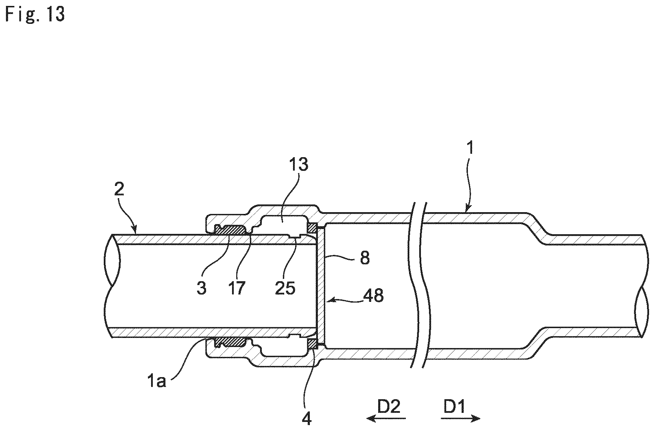

In the embodiments described above, the method for assembling the expansion pipe joint 10 which is a flexible expansion pipe joint has been exemplified, but the expansion pipe joint to which the present invention is applied is not limited to bendable (flexible) expansion pipe joints. In addition, the pipe body 1 need not necessarily have the structure including the casing 5 and the intermediate sleeve 6 fitted to the casing 5. FIG. 13 illustrates an example where the present invention is applied to an expansion pipe joint that is not bendable.

This embodiment can be configured in a similar manner to the above-described embodiment, except for the configuration described below; therefore, the description of common points will be omitted, and differences will be mainly described. The components already described are denoted by the same reference numerals to avoid the description from being redundant.

FIG. 13 illustrates a state in the mounting step immediately after the pipe body 2 is inserted into the lock ring 4 with an increased diameter and immediately before the temporary fixing jig 8 is removed from the lock ring 4 (see FIG. 5(A)). Further inserting the pipe body 2 causes the lock ring 4 to be mounted on the outer peripheral surface of the pipe body 2, and as a result, the expansion pipe joint is appropriately assembled. In the assembled expansion pipe joint, the pipe body 1 and the pipe body 2 inserted into the pipe body 1 are connected in a manner as to be relatively movable along the axial direction. At the respective ends of the pipe bodies 1 and 2 (not illustrated), for example, the flexible expansion pipe joint illustrated in FIG. 12 is provided. As a result, an expansion allowance of the expansion pipe joint can be added to a pipeline between a pair of flexible expansion pipe joints.

In FIG. 13, the assembled body 48 is fitted in the pipe body 1 by the temporary fixing step. However, unlike the embodiment described above, the assembled body 48 is internally fitted without the intermediate sleeve. Therefore, the temporary fixing jig 8 needs to be placed inside the pipe body 1 through the opening 1a on the detachment direction D2 side. Although not illustrated in the drawings, the opening 1a or engaging portion 17 of the pipe body 1 is formed with a notch that allows passage of the lock ring 4 with the radial direction of the lock ring 4 aligned with the axial direction of the pipe body 1. After the lock ring 4 is passed through the notch and placed inside the pipe body 1, the lock ring 4 can be turned in the annular groove 13 to align coaxially with the pipe body 1.

The embodiments of the present invention have been described above, but the embodiments should not be construed as limiting specific configurations. The present invention is not limited to the above-described embodiments at all, and various modifications and changes can be made without departing from the gist of the present invention. It is further possible to employ any combination of the configurations employed in the above-described embodiments.

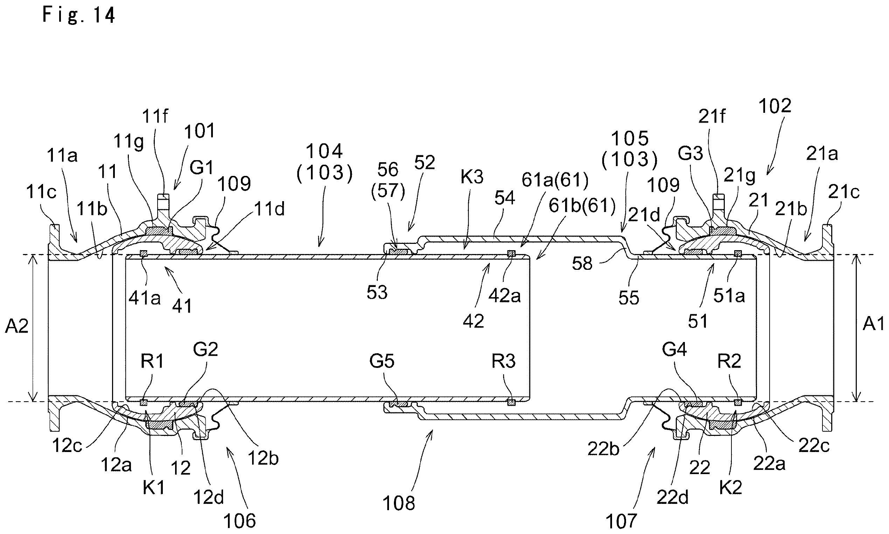

As described above, the embodiment of the present invention uses the temporary fixing jig to attach the lock ring to the outer peripheral surface of the pipe body, but a reference example in which such a temporary fixing jig is not used will be described with reference to FIGS. 14 to 24.

### Reference Example

The invention according to the present reference example relates to an expansion pipe joint including a pair of joint portions having a first joint portion and a second joint portion, and a coupling sleeve connected to the first joint portion and the second joint portion, the expansion pipe joint having an expansion structure, and a method of assembling the expansion pipe joint.

The expansion pipe joint as described above is used as, for example, a joint of a water pipe or the like, and has an expansion structure in order to absorb an external force of an earthquake or the like when the external force is generated. As such an expansion pipe joint, for example, there is an expansion pipe joint in which a coupling sleeve is fitted and connected to a first joint portion and a second joint portion, and a joint-side expansion structure is provided between a pair of joint portions and the coupling sleeve (see, for example, Japanese Patent No. 3184481 (hereinafter, Patent Document 3)).

In the expansion pipe joint described in Patent Document 3, the joint-side connection portion of the coupling sleeve is internally fitted to the first joint portion and the second joint portion so as to be relatively movable along a pipe axis direction, whereby the joint-side expansion structure is provided on a joint portion side. However, since an expansion range in the joint-side expansion structure is limited to a length of the joint portion in the pipe axis direction, expansion of the expansion range in the expansion structure may be desired in some cases.

Accordingly, there has been proposed an expansion pipe joint including not only a joint-side expansion structure between the joint portion and the coupling sleeve but also an inner sleeve and an outer sleeve as the coupling sleeve, and including a sleeve-side expansion structure between the inner sleeve and the outer sleeve (see, for example, Japanese Patent JP 4 409 668 B2 (hereinafter, Patent Document 4)).

The expansion pipe joint described in Patent Document 4 has a sleeve-side expansion structure between the inner sleeve and the outer sleeve by internally fitting a sleeve-side connection portion on a side opposite to the joint-side connection portion in the inner sleeve relatively movably along the pipe axis direction with respect to a sleeve-side connection portion on a side opposite to the joint-side connection portion in the outer sleeve. The sleeve-side connection portion of the inner sleeve is provided to be capable of being internally fitted to the sleeve-side connection portion of the outer sleeve by enlarging a diameter of the sleeve-side connection portion of the outer sleeve more than a diameter of the joint-side connection portion.

As described above, the expansion pipe joint described in Patent Document 4 includes not only the joint-side expansion structure but also the sleeve-side expansion structure, so that it is possible to meet a demand for expansion of the expansion range in the expansion structure. However, in the expansion pipe joint described in Patent Document 4, when the expansion pipe joint is assembled, complicated work needs to be performed, which leads to complexity and complication of assembly work.

In the expansion pipe joint described in Patent Document 4, a lock mechanism that restrict a relative movement range between the inner sleeve and the outer sleeve, and a seal member are provided between the sleeve-side connection portion of the inner sleeve and the sleeve-side connection portion of the outer sleeve, and an arrangement position thereof is such that the lock mechanism is on a side where the inner sleeve exists (back side) with respect to the seal member in the pipe axis direction.

Therefore, in assembling the expansion pipe joint, a step of installing the lock mechanism is performed when the sleeve-side connection portion of the inner sleeve is inserted into the sleeve-side connection portion of the outer sleeve, and then a step of mounting the seal member between the sleeve-side connection portion of the inner sleeve and the sleeve-side connection portion of the outer sleeve is performed. Therefore, in the step of mounting the seal member, it is necessary to perform complicated work such as, in a state where the sleeve-side connection portion of the inner sleeve is inserted into the sleeve-side connection portion of the outer sleeve, fitting the sleeve member in a gap between the sleeve-side connection portions, which increases the number of parts and leads to complexity and complication of the assembly work.

In view of this situation, a main object of the invention according to the present reference example is to provide an expansion pipe joint capable of simplifying assembly work while expanding an expansion range in an expansion structure, and a method for assembling the expansion pipe joint.

A first characteristic configuration of the invention according to the present reference example is an expansion pipe joint including a pair of joint portions having a first joint portion and a second joint portion, and a coupling sleeve connected to the first joint portion and the second joint portion, the expansion pipe joint having an expansion structure, in which
as the coupling sleeve,
a first sleeve having a joint-side expansion structure between the first sleeve and the first joint portion by internally fitting a joint portion side connection portion to the first joint portion in a relatively movable manner along a pipe axis direction, and
a second sleeve having a joint-side expansion structure between the second sleeve and the second joint portion by internally fitting a joint portion side connection portion to the second joint portion in a relatively movable manner along the pipe axis direction are provided,
a sleeve-side expansion structure is provided between the first sleeve and the second sleeve, the sleeve-side expansion structure being configured such that a sleeve-side connection portion on a side opposite to a joint-side connection portion in the first sleeve is internally fitted to a sleeve-side connection portion on a side opposite to a joint-side connection portion in the second sleeve so as to be relatively movable along the pipe axis direction,
a seal member that seals between an inner peripheral portion of the second sleeve and an outer peripheral portion of the first sleeve is provided at an end portion of the sleeve-side connection portion of the second sleeve into which the first sleeve is inserted,
a lock ring is provided at an end portion of the sleeve-side connection portion of the first sleeve inserted into the second sleeve, the lock ring abutting on an inner peripheral portion of the second sleeve to restrict a relative movement range of the second sleeve and the first sleeve in the pipe axis direction within a predetermined range, and
a transfer operation space in which transfer operation of the lock ring in an enlarged diameter state from a side where the joint-side connection portion of the second sleeve is located is allowed in the pipe axis direction with respect to a lock ring installing portion in which the lock ring is installed is provided inside the second sleeve.

With this configuration, not only the joint-side expansion structure is provided between the first sleeve and the first joint portion and between the second sleeve and the second joint portion, but also the sleeve-side expansion structure can be provided between the first sleeve and the second sleeve by fitting the first sleeve inside and the second sleeve outside. Thus, it is possible to meet the demand for expansion of the expansion range in the expansion structure.

Moreover, since the seal member is provided at the end portion of the sleeve-side connection portion of the second sleeve into which the first sleeve is inserted, and the lock ring is provided at the end portion of the sleeve-side connection portion of the first sleeve inserted into the second sleeve, it is possible to appropriately provide a sealing function and a mechanism for restricting a relative movement range between the first sleeve and the second sleeve within a predetermined range.

Furthermore, since the transfer operation space in which the transfer operation of the lock ring in the enlarged diameter state from the side where the joint-side connection portion of the second sleeve is located is allowed in the pipe axis direction with respect to the lock ring installing portion of the lock ring is provided inside the second sleeve, when the lock ring inserted into the second sleeve is installed, an attachment tool can be inserted into the second sleeve from the side where the joint-side connection portion of the second sleeve is located in the pipe axis direction, and the lock ring can be installed in the lock ring installing portion while being in the enlarged diameter state using the transfer operation space. Thus, the lock ring can be easily installed while effectively utilizing the transfer operation space, and the assembly work can be simplified.

A second characteristic configuration of the invention according to the present reference example is the expansion pipe joint according to the first characteristic configuration described above, in which
a movement allowing space that allows movement of the lock ring in the pipe axis direction is provided inside the second sleeve,
the second sleeve includes an enlarged diameter portion having an enlarged diameter larger than a diameter of the end portion of the sleeve-side connection portion, and
the movement allowing space and the transfer operation space are formed by the enlarged diameter portion.

With this configuration, it is possible to form the movement allowing space and the transfer operation space in the enlarged diameter portion only by providing the second sleeve with the enlarged diameter portion having an enlarged diameter larger than the diameter of the end portion of the sleeve-side connection portion, and to simplify the configuration.

A third characteristic configuration of the invention according to the present reference example is the expansion pipe joint according to the second characteristic configuration described above, in which
the second sleeve includes a reduced diameter portion having a reduced diameter smaller than the diameter of the enlarged diameter portion, and a connecting portion extending in a radial direction of the second sleeve and connecting the enlarged diameter portion and the reduced diameter portion, and
an end of the sleeve-side connection portion of the first sleeve abuts on an inner peripheral portion of the connecting portion in the second sleeve to restrict a relative movement range between the second sleeve and the first sleeve in the pipe axis direction within a predetermined range.

With this configuration, since the second sleeve includes the reduced diameter portion having a reduced diameter smaller than the diameter of the enlarged diameter portion, an outer diameter of the reduced diameter portion is the same diameter or substantially the same diameter as an outer diameter of the first sleeve, and the reduced diameter portion can be provided in the joint-side connection portion of the second sleeve. Thus, since the joint-side connection portion of the first sleeve and the joint-side connection portion of the second sleeve can have the same diameter or substantially the same diameter, the same joint portion can be adopted as the first joint portion and the second joint portion to be connected, and the configuration of the joint portion can be simplified and the cost can be reduced.

Moreover, when the second sleeve is provided with the reduced diameter portion, not only the connecting portion can be easily provided, but also the inner peripheral portion of the connecting portion can be brought into contact with the end of the sleeve-side connection portion of the first sleeve to be used as a member for restricting the relative movement range within a predetermined range, and the configuration can be simplified.

A fourth characteristic configuration of the invention according to the present reference example is the expansion pipe joint according to any one of the above-described first to third characteristic configurations, in which
a seal member installing portion in which the seal member is installed is provided on an inner peripheral portion of the end portion of the sleeve-side connection portion of the second sleeve, and
the seal member installing portion includes an insertion groove portion that allows the lock ring having an outer diameter larger than an inner diameter of the seal member installing portion to be inserted into the second sleeve in an insertion attitude different from a mounting attitude.

When the expansion pipe joint is assembled, the lock ring is inserted into the second sleeve, but for example, if the seal member installing portion and the lock ring interfere with each other, the lock ring cannot be inserted into the second sleeve. Therefore, with this configuration, since the seal member installing portion includes the insertion groove portion, the lock ring in the insertion attitude can be appropriately inserted into the second sleeve by allowing the lock ring to pass through the insertion groove portion.

A fifth characteristic configuration of the invention according to the present reference example is the expansion pipe joint according to the fourth characteristic configuration described above, in which
the seal member installing portion includes a fitting groove portion into which the seal member is fitted, and
groove depths of the fitting groove portion and the insertion groove portion are set so that a groove bottom portion of the fitting groove portion is located outside a groove bottom portion of the insertion groove portion in the radial direction of the second sleeve.

With this configuration, the groove depths of the fitting groove portion and the insertion groove portion are set so that the groove bottom portion of the fitting groove portion is located outside the groove bottom portion of the insertion groove portion in the radial direction of the second sleeve, and thus, the seal member can be fitted to the fitting groove portion even at the portion where the insertion groove portion is formed. Therefore, even if the insertion groove portion is formed in the seal member installing portion, a state in which the seal member is appropriately fitted into the fitting groove portion can be maintained, and thus, for example, it is possible to prevent occurrence of inconvenience such as a part of the seal member popping out from the fitting groove portion due to fluid pressure such as water pressure, and it is possible to appropriately exhibit the original sealing function.

A sixth characteristic configuration of the invention according to the present reference example is a method for assembling an expansion pipe joint that assembles the expansion pipe joint according to any one of the first to fifth characteristic configurations described above, the method including:
a first step of inserting a lock ring into a second sleeve;
a second step of inserting a first sleeve into the second sleeve in a state where a seal member is attached to an end portion of a sleeve-side connection portion of the second sleeve;
a third step of installing the lock ring inserted into the second sleeve at an end portion of a sleeve-side connection portion of the first sleeve inserted into the second sleeve;
a fourth step of internally fitting a joint-side connection portion of the first sleeve to a first joint portion to connect the first sleeve to the first joint portion, and internally fitting a joint-side connection portion of the second sleeve to the second joint portion to connect the second sleeve to the second joint portion, in which
in the third step, an attachment tool is inserted into the second sleeve from the side where the joint-side connection portion of the second sleeve is located in a pipe axis direction, and the lock ring is installed at the end portion of the sleeve-side connection portion of the first sleeve using the transfer operation space.

With this configuration, the expansion pipe joint can be suitably assembled in order by performing the first to fourth steps. Moreover, in the third step, the attachment tool is inserted into the second sleeve from the side where the joint-side connection portion of the second sleeve is located in the axial direction, and the lock ring is installed using the transfer operation space, so that the lock ring can be easily installed by effectively utilizing the transfer operation space.

A seventh characteristic configuration of the invention according to the present reference example is the method for assembling an expansion pipe joint according to the above-described sixth characteristic configuration, in which
a seal member installing portion for installing the seal member is provided on an inner peripheral portion of an end portion of the sleeve-side connection portion of the second sleeve, and
the seal member installing portion includes an insertion groove portion that allows the lock ring having an outer diameter larger than an inner diameter of the seal member installing portion to be inserted into the second sleeve, and
in the first step,
an insertion step of setting the lock ring in an insertion attitude in which an axial direction of the lock ring is orthogonal to a pipe axis direction of the second sleeve, and causing the lock ring in the insertion attitude to pass through the insertion groove portion to be inserted into the second sleeve; and
an attitude changing step of changing an attitude of the lock ring in the insertion attitude to a mounting attitude in which an axial direction of the lock ring coincides with a pipe axis direction of the second sleeve inside the second sleeve.

**In** the first step, the lock ring is inserted into the second sleeve. However, for example, if the seal member installing portion and the lock ring interfere with each other, the lock ring cannot be inserted into the second sleeve. Therefore, with this configuration, since the seal member installing portion includes the insertion groove portion, in the insertion step in the first step, the lock ring in the insertion attitude can be appropriately inserted into the second sleeve through the insertion groove portion by effectively using the insertion groove portion. Thereafter, by performing the attitude changing step, the attitude of the lock ring can be changed to the mounting attitude in which the axial direction of the lock ring coincides with the pipe axis direction of the second sleeve, and the lock ring can be mounted in an appropriate attitude.

An embodiment of an expansion pipe joint according to the invention according to the present reference example will be described with reference to the drawings.

As illustrated in FIGS. 14 to 16, an expansion pipe joint 100 is used as, for example, a joint of a water pipe or the like, and includes a pair of joint portions having a first joint portion 101 (left side in FIGS. 14 to 16) and a second joint portion 102 (right side in FIGS. 14 to 16) made of cast iron, and a coupling sleeve 103 made of cast iron and connected to the first joint portion 101 and the second joint portion 102. The coupling sleeve 103 includes a cylindrical first sleeve 104 fitted and connected to the first joint portion 101 and a cylindrical second sleeve 105 fitted and connected to the second joint portion 102.

As illustrated in FIGS. 14 to 16, a joint-side connection portion 41 of the first sleeve 104 is internally fitted to the first joint portion 101 so as to be relatively movable along a pipe axis direction (a left-right direction in FIGS. 14 to 16), whereby a joint-side expansion structure 106 is provided between the first joint portion 101 and the first sleeve 104. Similarly, the joint-side expansion structure 107 is provided between the second joint portion 102 and the second sleeve 105 by internally fitting a joint-side connection portion 51 of the second sleeve 105 to the second joint portion 102 so as to be relatively movable along the pipe axis direction. The sleeve-side expansion structure 108 is provided between the first sleeve 104 and the second sleeve 105 by internally fitting the sleeve-side connection portion 42 on a side opposite to the joint-side connection portion 41 in the first sleeve 104 relatively movably along the pipe axis direction with respect to the sleeve-side connection portion 52 on the side opposite to the joint-side connection portion 51 in the second sleeve 105.

As described above, not only the joint-side expansion structures 106 and 107 are provided between the first joint portion 101 and the first sleeve 104 and between the second joint portion 102 and the second sleeve 105, but also the sleeve-side expansion structure 108 can be provided between the first sleeve 104 and the second sleeve 105 by fitting the first sleeve 104 inside and the second sleeve 105 outside, so that it is possible to sufficiently meet the demand for expansion of the expansion range in the expansion structure.

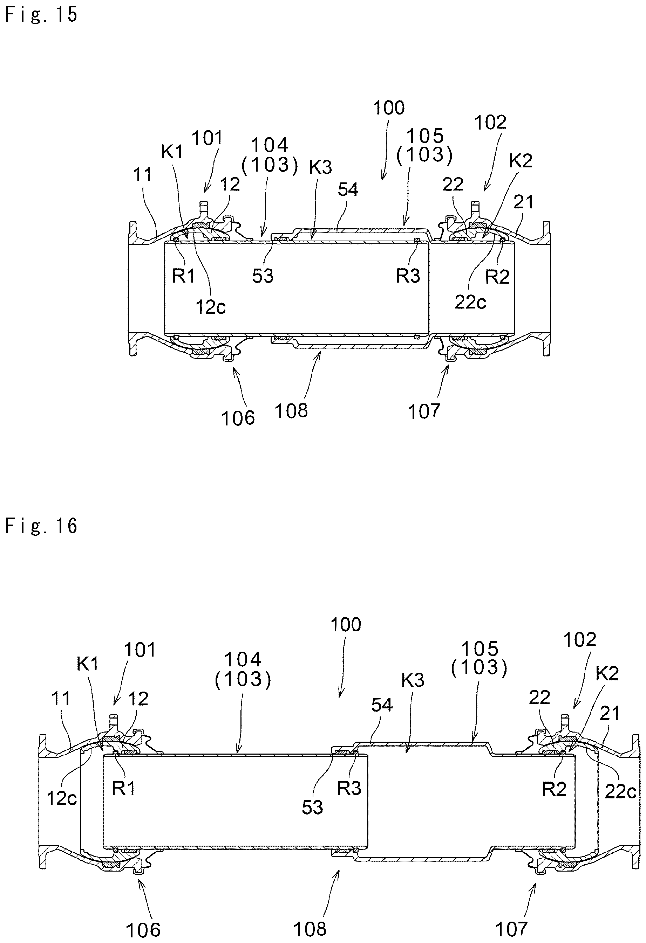

FIG. 14 illustrates a standard state in which the expansion pipe joint 100 is located at an intermediate position in the expansion range in the expansion structures of the joint-side expansion structures 106 and 107 and the sleeve-side expansion structure 108. FIG. 15 illustrates a minimum contracted state in which the expansion pipe joint 100 is located at a minimum position in the expansion range in the expansion structures of the joint-side expansion structures 106 and 107 and the sleeve-side expansion structure 108. FIG. 16 illustrates a maximum extension state in which the expansion pipe joint 100 is located at a maximum position in the expansion range in the expansion structures of the joint-side expansion structures 106 and 107 and the sleeve-side expansion structure 108.

Hereinafter, each configuration of the expansion pipe joint 100 will be described mainly with reference to FIG. 14.

### First joint portion

The first joint portion 101 on the left side in FIG. 14 includes a cylindrical outer joint body 11 having a water pipe-side connection portion 11a to which a water pipe or the like can be connected, and a spherical cylindrical (hollow ball-shaped with both sides cut in the pipe axis direction) inner joint body 12 having a spherical outer peripheral surface 12a slidably fitted to a spherical inner peripheral surface 11b of the outer joint body 11.

A bending structure is provided in which the spherical inner peripheral surface 11b of the outer joint body 11 is bendably externally fitted in a three-dimensional direction to the spherical outer peripheral surface 12a of the inner joint body 12 externally fitted to the first sleeve 104, so that the first sleeve 104 is bendable with respect to the first joint portion 101.

The water pipe-side connection portion 11a of the outer joint body 11 is provided with an annular coupling flange 11c. A water pipe or the like is configured to be fixedly connectable to the coupling flange 11c in the pipe axis direction via a fastening tool such as a bolt or a nut. A connection opening 11d through which the inner joint body 12 and the first sleeve 104 can be inserted and removed is provided on a side opposite to the water pipe-side connection portion 11a of the outer joint body 11 in the pipe axis direction.

A tie rod attachment portion 11f extending radially outward of the outer joint body 11 is provided at a maximum inner diameter portion of the spherical inner peripheral surface 11b of the outer joint body 11. Although not illustrated, the tie rod attachment portion 11f is for attaching a tie-rod in a state of extending between the first joint portion 101 and the second joint portion 102, and by attaching the tie-rod over the first joint portion 101 and the second joint portion 102, the expansion pipe joint 100 can be made non-expandable and non-bendable at the time of transportation.

In an annular seal mounting groove 11g formed in a maximum inner diameter portion of the spherical inner peripheral surface 11b of the outer joint body 11, a first rubber ring G1 is mounted as a seal member that slidably seals between the spherical inner peripheral surface 11b and the spherical outer peripheral surface 12a of the inner joint body 12 in a watertight manner.

On an inner peripheral side of the inner joint body 12, a fitting inner peripheral surface 12b slidably fitted to an outer peripheral surface of the first sleeve 104 and an annular recess 12c annularly recessed outward in a radial direction of the first sleeve 104 (upward and downward in FIG. 14) with respect to the outer peripheral surface of the first sleeve 104 are formed. In an annular seal mounting groove 12d formed in the fitting inner peripheral surface 12b of the inner joint body 12, a second rubber ring G2 is mounted as a seal member that slidably seals between the fitting inner peripheral surface 12b and the outer peripheral surface of the first sleeve 104 in a watertight manner.

An annular lock ring mounting groove 41a is formed at an end portion of an outer peripheral surface of the joint-side connection portion 41 of the first sleeve 104, and a first lock ring R1 is fitted and mounted in the lock ring mounting groove 41a. As illustrated in FIG. 14 in the standard state, the first lock ring R1 is disposed at a position facing an annular recess 12c formed on the inner peripheral side of the inner joint body 12 with a space therebetween, and the annular recess 12c forms a first movement allowing space K1 that allows movement of the first lock ring R1 in the pipe axis direction. As illustrated in FIG. 15 in the minimum contracted state and FIG. 16 in the maximum extension state, an end of the annular recess 12c in the pipe axis direction abuts on the first lock ring R1 to thereby restrict the expansion range of the joint-side expansion structure 106 to a predetermined range.

### Second joint portion

The second joint portion 102 on the right side in FIG. 14 is the same joint portion as the first joint portion 101 and has the same configuration as the first joint portion 101. Therefore, by giving the same names as the names of the components of the first joint portion 101, a detailed description will be omitted and a simple description will be given. Incidentally, regarding reference numerals, the configurations of the first joint portion 101 are 11, 11a to 11g, 12, and 12a to 12d, whereas the configurations of the second joint portion 102 are 21, 21a to 21g, 22, and 22a to 22d.

Similarly to the first joint portion 101, the second joint portion 102 includes an outer joint body 21 and an inner joint body 22. Similarly to the outer joint body 11 of the first joint portion 101, the outer joint body 21 includes a water pipe-side connection portion 21a, a spherical inner peripheral surface 21b, a coupling flange 21c, a connection opening 21d, a tie rod attachment portion 21f, and a seal mounting groove 21g. Similarly to the inner joint body 12 of the first joint portion 101, the inner joint body 22 includes a spherical outer peripheral surface 22a, a fitting inner peripheral surface 22b, an annular recess 22c, and a seal mounting groove 22d.

In the seal mounting groove 21g of the outer joint body 21, a third rubber ring G3 as a seal member that slidably seals between the spherical inner peripheral surface 21b of the outer joint body 21 and the spherical outer peripheral surface 22a of the inner joint body 22 in a watertight manner is mounted. In the seal mounting groove 22d of the inner joint body 22, a fourth rubber ring G4 as a seal member that slidably seals between the fitting inner peripheral surface 22b of the inner joint body 12 and the outer peripheral surface of the second sleeve 105 in a watertight manner is mounted.

An annular lock ring mounting groove 51a is formed at an end portion of an outer peripheral surface of the joint-side connection portion 51 of the second sleeve 105, and a second lock ring R2 is fitted and mounted in the lock ring mounting groove 51a. As illustrated in FIG. 14 in the standard state, the second lock ring R2 is disposed at a position facing an annular recess 22c formed on an inner peripheral side of the inner joint body 22 with a space therebetween, and the annular recess 22c forms a second movement allowing space K2 that allows movement of the second lock ring R2 in the pipe axis direction. As illustrated in FIG. 15 in the minimum contracted state and FIG. 16 in the maximum extension state, an end of the annular recess 22c in the pipe axis direction abuts on the second lock ring R2 to thereby restrict the expansion range of the joint-side expansion structure 107 to a predetermined range.

### Connection configuration between first sleeve and second sleeve

The sleeve-side connection portion 42 of the first sleeve 104 is internally fitted to the sleeve-side connection portion 52 of the second sleeve 105 so as to be relatively movable along the pipe axis direction, and the first sleeve 104 on the inside and the second sleeve 105 on the outside are fitted and connected to each other.

The first sleeve 104 is formed of a cylindrical pipe having the same outer diameter and linearly extending in the pipe axis direction. On the other hand, the second sleeve 105 is formed of a cylindrical pipe whose outer diameter changes in the pipe axis direction. The second sleeve 105 includes, from the sleeve-side connection portion 52 side toward the joint-side connection portion 51 side in the pipe axis direction, a fitting portion 53 slidably fitted to the outer peripheral surface of the first sleeve 104, an enlarged diameter portion 54 having an enlarged diameter larger than the diameter of the fitting portion 53, and a reduced diameter portion 55 having a reduced diameter smaller than the diameter of the enlarged diameter portion 54.

The reduced diameter portion 55 of the second sleeve 105 is formed to have an outer diameter A1 which is the same or substantially the same as an outer diameter A2 of the first sleeve 104, and the reduced diameter portion 55 is provided as the joint-side connection portion 51 of the second sleeve 105. Thus, since the joint-side connection portion 41 of the first sleeve 104 and the reduced diameter portion 55 that is the joint-side connection portion 51 of the second sleeve 105 can have the same diameter or substantially the same diameter, the same joint portion can be adopted as the first joint portion 101 and the second joint portion 102 to be connected.

The fitting portion 53 of the sleeve-side connection portion 52 of the second sleeve 105 is provided with a seal member installing portion 56 for installing a seal member. In the seal member installing portion 56, a fifth rubber ring G5 is installed as a seal member that slidably seals between the seal member installing portion 56 and the outer peripheral surface of the first sleeve 104 in a watertight manner. The seal member installing portion 56 is provided with a fitting groove portion 57 into which the fifth rubber ring G5 can be fitted, and the fifth rubber ring G5 is fitted and attached to the fitting groove portion 57.

An annular lock ring mounting groove 42a is provided at an end portion of an outer peripheral surface of the sleeve-side connection portion 42 of the first sleeve 104, and a third lock ring R3 is fitted and mounted in the lock ring mounting groove 42a. The third lock ring R3 abuts on an inner peripheral portion of the second sleeve 105 to restrict a relative movement range between the first sleeve 104 and the second sleeve 105 in the pipe axis direction within a predetermined range.

As illustrated in FIG. 14 in the standard state, the third lock ring R3 is disposed at a position facing an inner peripheral surface of the enlarged diameter portion 54 of the second sleeve 105 with a space therebetween, and the enlarged diameter portion 54 forms a third movement allowing space K3 that allows movement of the third lock ring R3 in the pipe axis direction.

In the inner peripheral portion of the second sleeve 105, an end portion of the fitting portion 53 is disposed at a position where the end portion can abut on the third lock ring R3, in a radial direction (vertical direction in FIG. 14) of the second sleeve 105. As illustrated in FIG. 16 in the maximum extension state, the third lock ring R3 abuts on an inner end portion of the fitting portion 53 to thereby restrict a range on an extension side with respect to the relative movement range between the first sleeve 104 and the second sleeve 105 in the pipe axis direction.

A connecting portion 58 extending in the radial direction of the second sleeve 105 and connecting the enlarged diameter portion 54 and the reduced diameter portion 55 is provided between the enlarged diameter portion 54 and the reduced diameter portion 55 in the second sleeve 105. The connecting portion 58 is formed in an inclined shape whose diameter is gradually reduced from the enlarged diameter portion 54 toward the reduced diameter portion 55 in the pipe axis direction. In an inner peripheral portion of the connecting portion 58, an end portion on the reduced diameter portion 55 side is disposed at a position where the end portion can abut on an end portion of the sleeve-side connection portion 42 of the first sleeve 104 in the radial direction (vertical direction in FIG. 14) of the second sleeve 105. The end portion of the sleeve-side connection portion 42 of the first sleeve 104 abuts on the end portion on the reduced diameter portion 55 side in the inner peripheral portion of the connecting portion 58, to thereby restrict a range on a contraction side with respect to the relative movement range of the first sleeve 104 and the second sleeve 105 in the pipe axis direction.

In this manner, a length of the enlarged diameter portion 54 in the pipe axis direction corresponds to a size of a predetermined range in a relative movement range of the sleeve-side expansion structure 108. In this embodiment, by making the length of the enlarged diameter portion 54 in the pipe axis direction longer than the reduced diameter portion 55, a larger relative movement range is ensured as the sleeve-side expansion structure 108.

Hereinafter, a method for assembling the expansion pipe joint 100 will be described.

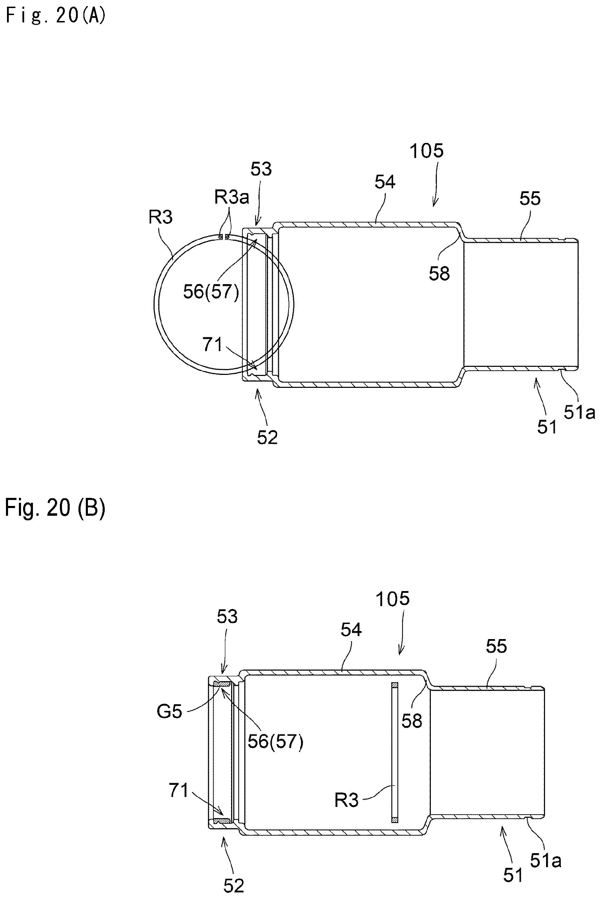

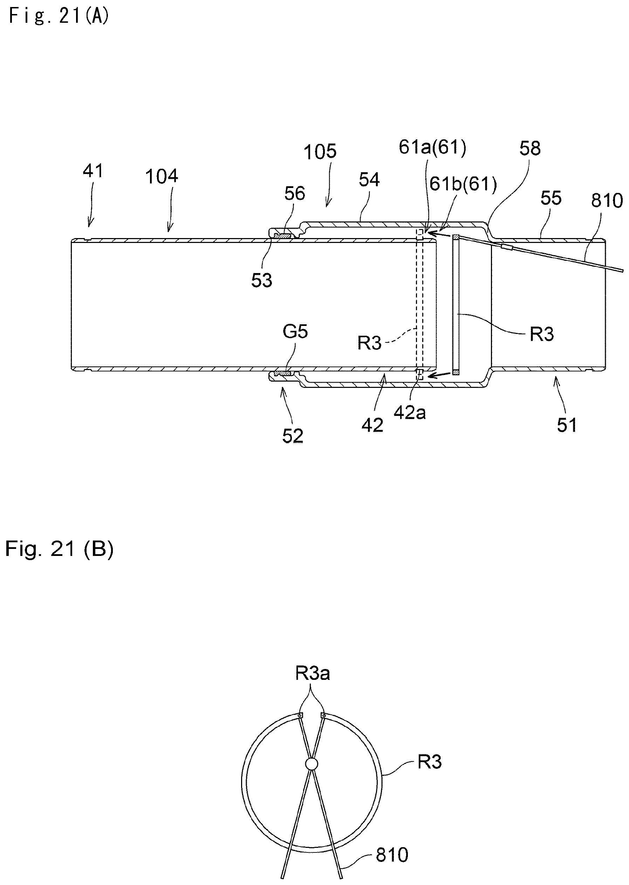

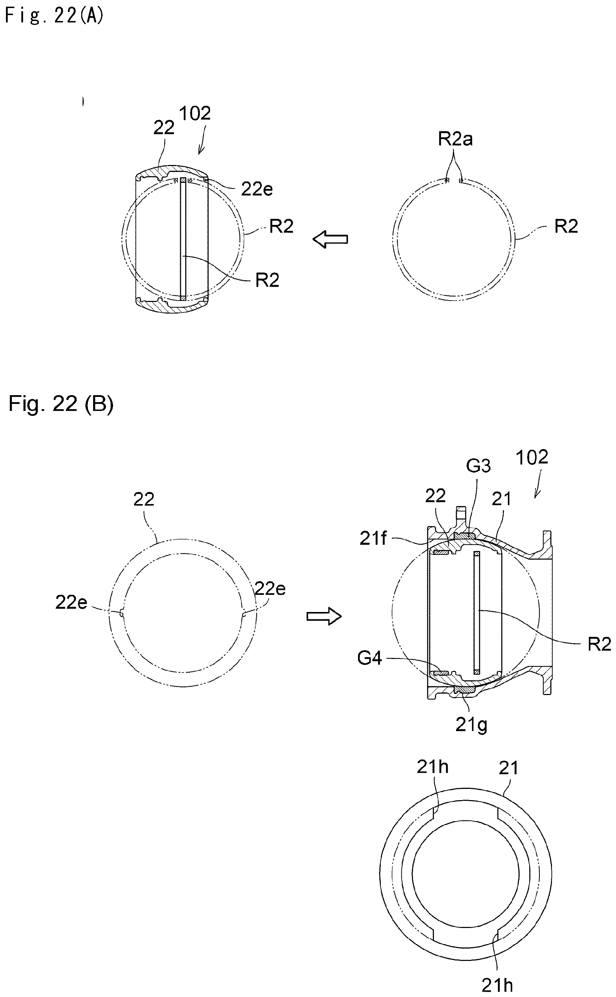

In this embodiment, the expansion pipe joint 100 is assembled by performing four steps of first to fourth steps. As illustrated in FIG. 20, the first step is a step of inserting the third lock ring R3 into the second sleeve 105. As illustrated in FIG. 21, the second step is a step of inserting the first sleeve 104 into the second sleeve 105. As illustrated in FIG. 21, the third step is a step of installing the third lock ring R3 on the sleeve-side connection portion 42 of the first sleeve 104. As illustrated in FIGS. 22 to 24, the fourth step is a step of connecting the first sleeve 104 to the first joint portion 101 and connecting the second sleeve 105 to the second joint portion 102.

### First step

In the first step, as illustrated in FIG. 20, the third lock ring R3 is inserted into the second sleeve 105. FIG. 20(A) is a view illustrating a process of inserting the third lock ring R3 into the second sleeve 105, and FIG. 20(B) is a view illustrating a state in which the third lock ring R3 is inserted into the second sleeve 105.

As illustrated in FIG. 20(A), when the third lock ring R3 is inserted into the second sleeve 105, an insertion step is performed in which the third lock ring R3 is brought into an insertion attitude in which its axial direction (direction perpendicular to the paper surface) is orthogonal to the pipe axis direction of the second sleeve 105, and the third lock ring R3 in the insertion attitude is inserted into the second sleeve 105.

Here, the third lock ring R3 will be described. As illustrated in FIG. 20(A), the third lock ring R3 is formed in a C shape that is obtained by cutting and separating one position in a circumferential direction and elastically deformable toward an enlarged diameter side. An engagement hole R3a through which both locking portions of an attachment tool 810 (see FIG. 21(B)) for performing a diameter expansion operation on the third lock ring R3 are engageable and disengageable is formed at both ends which are cut and separated.

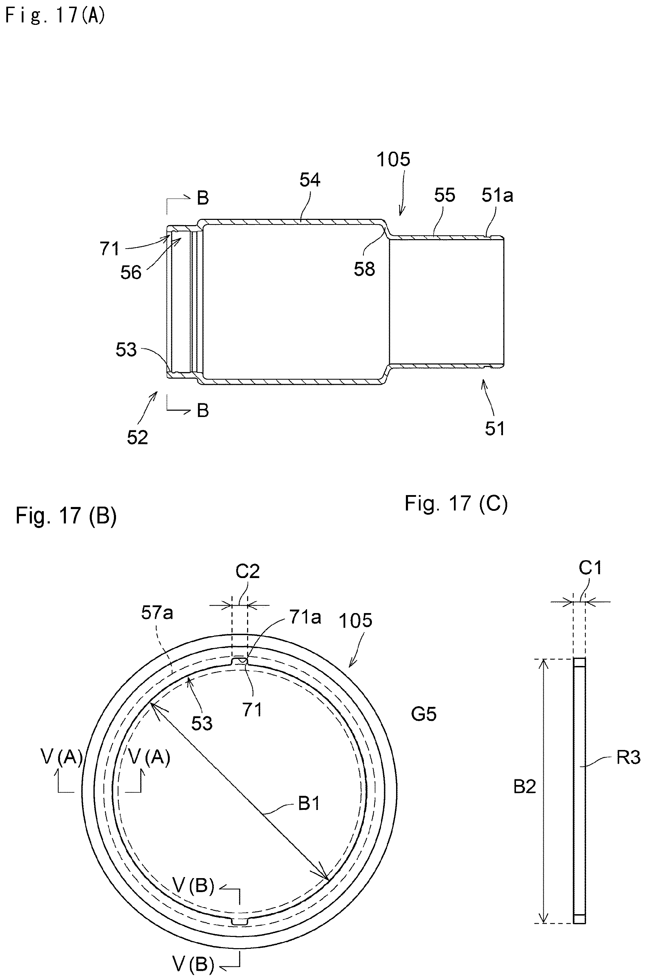

In the insertion step, the third lock ring R3 in the insertion attitude is inserted into the second sleeve 105 from an end side of the sleeve-side connection portion 52 in which the seal member installing portion 56 is disposed in the second sleeve 105. At this time, regarding a magnitude relationship between an inner diameter of the seal member installing portion 56 of the second sleeve 105 and an outer diameter of the third lock ring R3, as illustrated in FIGS. 17(B) and 17(C), an inner diameter B1 of an end opening of the seal member installing portion 56 is formed to be smaller than the outer diameter B2 of the third lock ring R3. Therefore, even if the third lock ring R3 is brought into the insertion attitude, movement of the third lock ring R3 into the second sleeve 105 is hindered by the seal member installing portion 56, and the third lock ring R3 in the insertion attitude cannot be inserted into the second sleeve 105. Incidentally, FIG. 17(A) is a longitudinal sectional view of the second sleeve 105, FIG. 17(B) is a view taken along line B-B in FIG. 17(A) in an arrow direction when the end of the sleeve-side connection portion 52 of the second sleeve 105 is viewed from a direction along the pipe axis direction, and FIG. 17(C) is a view illustrating the third lock ring R3.

Therefore, as illustrated in FIG. 17(B), the seal member installing portion 56 is provided with an insertion groove portion 71 that allows the third lock ring R3 in the insertion attitude to be freely inserted into the second sleeve 105. The insertion groove portions 71 are formed at two diametrically opposed positions in the second sleeve 105, and allow an upper end portion and a lower end portion of the third lock ring R3 in the insertion attitude to freely pass through. The insertion groove portion 71 is formed so that a width C2 in a circumferential direction of the second sleeve 105 is larger than a width C1 of the third lock ring R3 by a predetermined width
(For example, 5 mm).

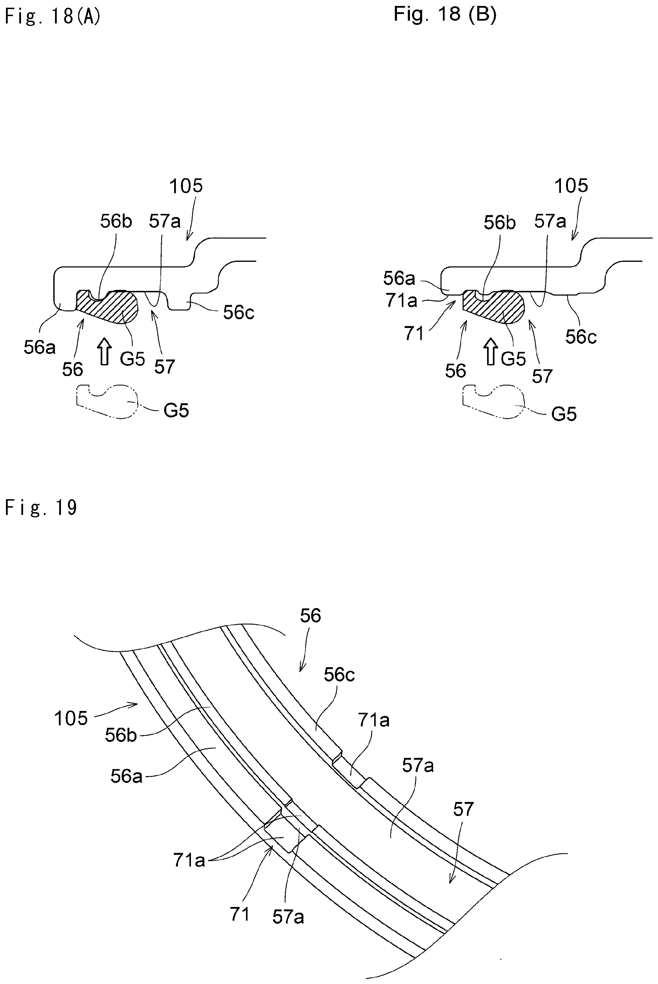

As illustrated in FIGS. 18 and 19, a fitting groove portion 57 into which the fifth rubber ring G5 is fitted is formed in the seal member installing portion 56. The fitting groove portion 57 is formed in an uneven shape by a first protruding portion 56a, a second protruding portion 56b, and a third protruding portion 56c protruding inward in the radial direction in the second sleeve 105. As illustrated in FIG. 18(A), the fifth rubber ring G5 is fitted and attached to the fitting groove portion 57 in a state where the uneven fifth rubber ring G5 is fitted between the first protruding portion 56a and the second protruding portion 56b and between the second protruding portion 56b and the third protruding portion 56c.

As illustrated in FIGS. 18(B) and 19, the insertion groove portion 71 is formed by cutting out the first protruding portion 56a, the second protruding portion 56b, and the third protruding portion 56c by a predetermined amount. As illustrated in FIGS. 17(B) and 18(B), groove depths of the fitting groove portion 57 and the insertion groove portion 71 of the seal member installing portion 56 are set so that a flat groove bottom portion 57a of the fitting groove portion 57 is positioned radially outward of the second sleeve 105 (upward in FIG. 18(B)) with respect to the flat groove bottom portion 71a of the insertion groove portion 71. Incidentally, in FIG. 17(B), the fifth rubber ring G5 is indicated by a dotted line, and a radially outer end of the fifth rubber ring G5 serves as a sealing surface that comes into contact with the groove bottom portion 57a of the fitting groove portion 57.

Thus, the groove bottom portion 57a of the fitting groove portion 57, which comes into contact with the fifth rubber ring G5 and serves as a sealing surface, is positioned radially outward of the second sleeve 105 with respect to the groove bottom portion 71a of the insertion groove portion 71 located on an outermost side in the radial direction of the second sleeve 105. Therefore, since a larger fitting margin (fitting length) of the fifth rubber ring G5 in the radial direction of the second sleeve 105 can be ensured with respect to the fitting groove portion 57, even when the insertion groove portion 71 is formed in the fitting groove portion 57, it is possible to prevent occurrence of inconvenience such as a part of the fifth rubber ring G5 protruding from the fitting groove portion 57 due to fluid pressure such as water pressure, for example.

Returning to the description of the operation of the first step, when the insertion step of inserting the third lock ring R3 in the insertion attitude into the second sleeve 105 through the insertion groove portion 71 is performed as illustrated in FIG. 20(A), next, the attitude changing step of changing the attitude of the third lock ring R3 in the insertion attitude to a mounting attitude in which the axial direction coincides with the pipe axis direction of the second sleeve 105 is performed inside the second sleeve 105 as illustrated in FIG. 20(B). In this manner, in the first step, the insertion step and the attitude changing step are performed to allow the third lock ring R3 to exist in the mounting attitude inside the second sleeve 105.

### Second step

In the second step, as illustrated in FIG. 21(A), the first sleeve 104 is inserted into the second sleeve 105 in a state where the fifth rubber ring G5 is attached to the seal member installing portion 56 in the sleeve-side connection portion 52 of the second sleeve 105. At this time, after applying an appropriate amount of lubricant to the outer peripheral portion of the first sleeve 104, the fifth rubber ring G5, and the like, the outer peripheral portion of the first sleeve 104 and the fifth rubber ring G5 are slid, and the first sleeve 104 is inserted into the second sleeve 105 to internally fit the first sleeve 104 to the second sleeve 105.

### Third step

In the third step, as illustrated in FIG. 21(A), the third lock ring R3 inserted into the second sleeve 105 is installed in the lock ring mounting groove 42a in the sleeve-side connection portion 42 of the first sleeve 104 inserted into the second sleeve 105.

In the third step, as illustrated in FIG. 21(A), the attachment tool 810 is first inserted into the second sleeve 105 from a side where the joint-side connection portion 51 of the second sleeve 105 is located in the pipe axis direction, and as illustrated in FIG. 21(B), the attachment tool 810 is engaged with the engagement hole R3a of the third lock ring R3, and a diameter expansion operation is performed on the third lock ring R3 against elastic restoring force.

Next, as illustrated in FIG. 21(A), in a state where the diameter expansion operation is performed on the third lock ring R3, a transfer operation (movement operation) into the space between the inner peripheral surface of the second sleeve 105 and the outer peripheral surface of the first sleeve 104 is performed, and the diameter expansion operating force is released at the position corresponding to the lock ring mounting groove 42a, so that the diameter of the third lock ring R3 is reduced by the elastic restoring force and is fitted and held in the lock ring mounting groove 42a.

As described above, in order to install the third lock ring R3 in the lock ring mounting groove 42a, as illustrated in FIGS. 14 and 21(A), a transfer operation space 61 in which a transfer operation of the third lock ring R3 can be performed in the enlarged diameter state from the side where the joint-side connection portion 51 of the second sleeve 105 is located in the pipe axis direction to the lock ring mounting groove 42a (corresponding to the lock ring installing portion) is provided inside the second sleeve 105.

As illustrated in FIGS. 14 and 21(A), the transfer operation space 61 is formed as a space enlarged outward in the radial direction with respect to the outer peripheral portion of the first sleeve 104 by the enlarged diameter portion 54 of the second sleeve 105. The transfer operation space 61 includes a radially extending space 61a extending in communication with the lock ring mounting groove 42a and a pipe-axis-direction extending space 61b extending in communication with the joint-side connection portion 51 side of the second sleeve 105 in the pipe axis direction with respect to the radially extending space 61a. In the transfer operation space 61, a space enlarged radially outward with respect to the outer peripheral portion of the first sleeve 104 from a position corresponding to the lock ring mounting groove 42a in the pipe axis direction is a series of spaces extending to the side where the joint-side connection portion 51 of the second sleeve 105 is located.

By forming the transfer operation space 61 in this manner, when the third lock ring R3 inserted into the second sleeve 105 is installed, the third lock ring R3 subjected to the diameter expansion operation using the attachment tool 810 can be smoothly subjected to a transfer operation (movement operation) to the position corresponding to the lock ring mounting groove 51a through the pipe-axis-direction extending space 61b and the radially extending space 61a in the transfer operation space 61, and the installation work of the third lock ring R3 can be simplified.

### Fourth step

In the fourth step, as illustrated in FIGS. 22 to 24, a first connection step of internally fitting the joint-side connection portion 41 of the first sleeve 104 to the first joint portion 101 to connect the first sleeve 104 to the first joint portion 101, and a second connection step of internally fitting the joint-side connection portion 51 of the second sleeve 105 to the second joint portion 102 to connect the second sleeve 105 to the second joint portion 102 are performed.

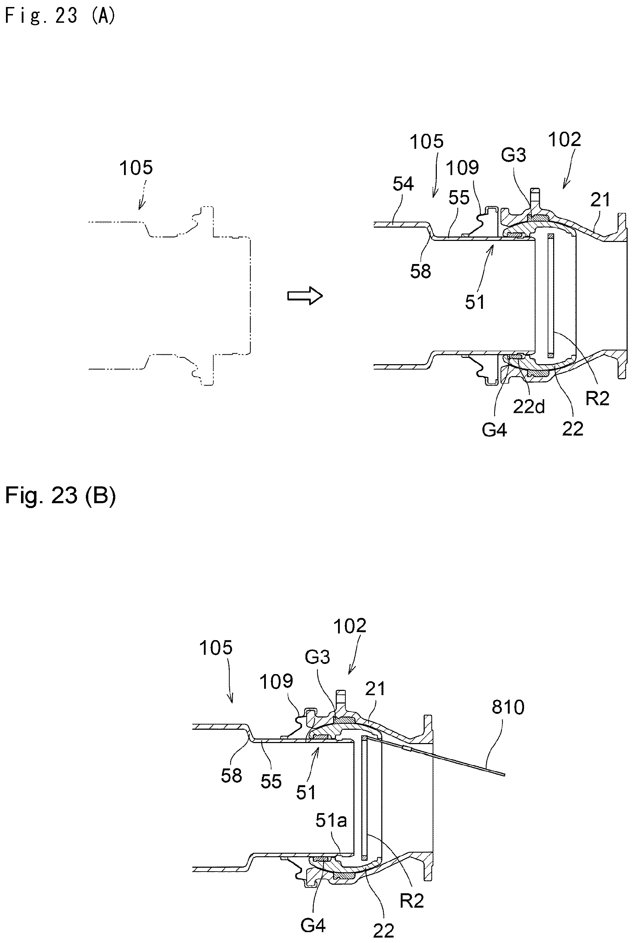

The first connection step and the second connection step basically perform similar operations, and only whether the connecting member connects the first sleeve 104 and the first joint portion 101 or connects the second sleeve 105 and the second joint portion 102 is different. Therefore, hereinafter, the second connection step of connecting the second sleeve 105 to the second joint portion 102 will be described with reference to FIGS. 22 and 23, and the detailed description of the first connection step of connecting the first sleeve 104 to the first joint portion 101 will be omitted.

In the second connection step, a lock ring insertion step illustrated in FIG. 22(A), an inner joint body mounting step illustrated in FIG. 22(B), a sleeve insertion step illustrated in FIG. 23(A), and a lock ring mounting step illustrated in FIG. 23(B) are performed.

In the lock ring insertion step, as illustrated in FIG. 22(A), the second lock ring R2 is brought into an insertion attitude in which the axial direction of the second lock ring R2 is orthogonal to the pipe axis direction of the inner joint body 22 in the second joint portion 102, and the second lock ring R2 in the insertion attitude is inserted into the inner joint body 22.

Similarly to the third lock ring R3 (see FIG. 20(A)), the second lock ring R2 is formed in a C shape that is obtained by cutting and separating one position in the circumferential direction and elastically deformable toward an enlarged diameter side. An engagement hole R2a through which both locking portions of an attachment tool 810 (see FIG. 21(B)) for performing a diameter expansion operation on the second lock ring R2 are engageable and disengageable is formed at both ends which are cut and separated.

An inner diameter of an opening on the side into which the second lock ring R2 is inserted in the inner joint body 22 is formed to be smaller than an outer diameter of the second lock ring R2. Accordingly, as illustrated on the left side of FIG. 22(B), notches 22e that allow the second lock ring R2 in the insertion attitude to be freely inserted into the inner joint body 22 are provided in the opening on the side where the second lock ring R2 is inserted in the inner joint body 22. The notches 22e are formed at two diametrically opposed positions in the inner joint body 22, and allow an upper end portion and a lower end portion of the second lock ring R2 in the insertion attitude to freely pass through.

In this manner, as illustrated in FIG. 22(A), when the second lock ring R2 in the insertion attitude is inserted into the inner joint body 22 through the notches 22e, the attitude of the second lock ring R2 in the insertion attitude is changed to the mounting attitude in which the axial direction thereof coincides with the pipe axis direction of the inner joint body 22 inside the inner joint body 22. In FIG. 22(A), the second lock ring R2 in the insertion attitude is indicated by a one-dot chain line, and the second lock ring R2 whose attitude has been changed to the mounting attitude is indicated by a solid line.

In the inner joint body mounting step, as illustrated in FIG. 22(B), the inner joint body 22 is brought into an insertion attitude in which the axial direction of the inner joint body is orthogonal to the pipe axis direction of the outer joint body 21 of the second joint portion 102, and the inner joint body 22 in the insertion attitude is inserted into the outer joint body 21. When the inner joint body 22 in the insertion attitude is inserted into the outer joint body 21, in a state where the third rubber ring G3 is attached to the seal mounting groove 21g of the outer joint body 21, an appropriate amount of lubricant is applied to the third rubber ring G3 and the outer peripheral portion of the inner joint body 22 to slide the third rubber ring G3 and the outer peripheral portion of the inner joint body 22, and the inner joint body 22 is internally fitted to the outer joint body 21.

An inner diameter of an opening on the side into which the inner joint body 22 is inserted in the outer joint body 21 is formed to be smaller than an outer diameter of the inner joint body 22. Accordingly, as illustrated on the lower side of FIG. 22(B), notches 21h that allow the inner joint body 22 in the insertion attitude to be freely inserted into the outer joint body 21 are provided in the opening on the side where the inner joint body 22 is inserted in the outer joint body 21. The notches 21h are formed at two diametrically opposed positions in the inner joint body 22, and allow an upper end portion and a lower end portion of the inner joint body 22 in the insertion attitude to freely pass through.

In this manner, as illustrated in FIG. 22(B), when the inner joint body 22 in the insertion attitude is inserted into the outer joint body 21 through the notch 22e, the attitude of the inner joint body 22 in the insertion attitude is changed to the mounting attitude in which the axial direction thereof coincides with the pipe axis direction of the outer joint body 21 inside the outer joint body 21. In FIG. 22(B), the inner joint body 22 in the insertion attitude is indicated by a one-dot chain line, and the inner joint body 22 whose attitude has been changed to the mounting attitude is indicated by a solid line.

In the sleeve insertion step, as illustrated in FIG. 23(A), in a state where the fourth rubber ring G4 is mounted in the seal mounting groove 22d of the inner joint body 22, an appropriate amount of lubricant is applied to the fourth rubber ring G4 and the outer peripheral portion of the second sleeve 105, and the fourth rubber ring G4 and the outer peripheral simiportion of the second sleeve 105 are slid to internally fit the second sleeve 105 to the inner joint body 22. Incidentally, a rubber cover 109 is connected to the outer peripheral portion of the second sleeve 105, and the cover 109 is connected to an outer peripheral portion of the outer joint body 21 of the second joint portion 102 so that the cover 109 is attached in a state of covering a connection portion between the second joint portion 102 and the second sleeve 105 and the like as illustrated in FIG. 14.

In the lock ring mounting step, as illustrated in FIG. 23(B), the second lock ring R2 is mounted in the lock ring mounting groove 51a of the joint-side connection portion 51 of the second sleeve 105 inserted into the inner joint body 22. The attachment tool 810 is inserted into the inner joint body 22 from the end openings of the outer joint body 21 and the inner joint body 22 of the second joint portion 102 in the pipe axis direction. Similarly to FIG. 21(A) of the third step, the attachment tool 810 is engaged with the engagement hole R2a (see FIG. 22(A)) of the second lock ring R2, the diameter expansion operation is performed on the second lock ring R2 against the elastic restoring force, a transfer operation (movement operation) of the second lock ring R2 to the position corresponding to the lock ring mounting groove 51a of the second sleeve 105 is performed, and the diameter expansion operating force is released, whereby the diameter of the second lock ring R2 is reduced by the elastic restoring force, and the second lock ring R2 is fitted and held in the lock ring mounting groove 51a.

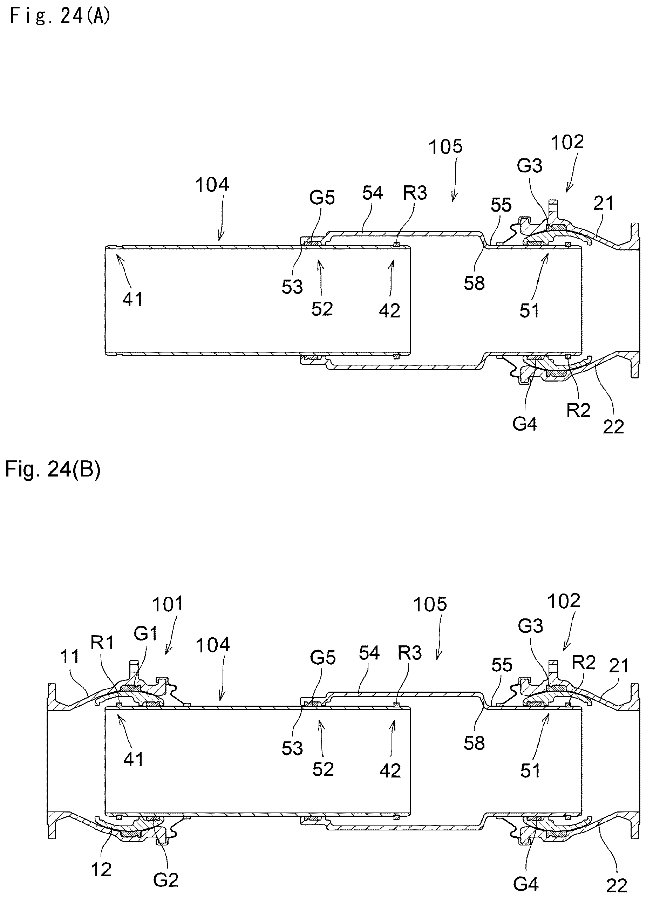

In this manner, in the second connection step, by performing the lock ring insertion step illustrated in FIG. 22(A), the inner joint body mounting step illustrated in FIG. 22(B), the sleeve insertion step illustrated in FIG. 23(A), and the lock ring mounting step illustrated in FIG. 23(B), as illustrated in FIG. 24(A), the joint-side connection portion 51 of the second sleeve 105 is internally fitted to the second joint portion 102, and the second sleeve 105 is connected to the second joint portion 102.

Although not illustrated, in the first connection step, similarly to the second connection step, by performing the lock ring insertion step, the inner joint body mounting step, the sleeve insertion step, and the lock ring mounting step, as illustrated in FIG. 24(B), the joint-side connection portion 41 of the first sleeve 104 is internally fitted to the first joint portion 101, and the first sleeve 104 is connected to the first
joint portion 101.

As described above, in the present embodiment, by sequentially performing the first to fourth steps, it is possible to appropriately ensure the sealing function of the fifth rubber ring G between the first sleeve 104 and the second sleeve 105, to insert the third lock ring R3 into the second sleeve 105, and to appropriately assemble the expansion pipe joint 100 in order while simplifying the installation work of the third lock ring R3.

### Another embodiment

Another embodiment of the invention according to the present reference example will be described. Note that the configurations of the respective embodiments described below are not limited to being applied alone, and can be applied in combination with configurations of other embodiments.
(1) In the above embodiment, in the second sleeve 105, the enlarged diameter portion 54 is formed from a position adjacent to the fitting portion 53 in the pipe axis direction, and a width of the third movement allowing space K3 in the radial direction of the second sleeve 105 is substantially the same over the entire length thereof regardless of the position where the transfer operation space 61 is formed. Alternatively, for example, an enlarged diameter portion can be formed from a position away from the fitting portion 53 in the pipe axis direction, and the width of the third movement allowing space K3 in the radial direction of the second sleeve 105 can be changed.
   For example, the width of the third movement allowing space K3 in the radial direction of the second sleeve 105 can be changed according to the formation location of the transfer operation space 61, such as making the width of the third movement allowing space K3 in the radial direction of the second sleeve 105 narrower in a portion deviated to the side where the fitting portion 53 is located than in the transfer operation space 61, and wider in a portion corresponding to the formation location of the transfer operation space 61.
(2) In the above embodiment, in the second sleeve 105, the connecting portion 58 that connects the enlarged diameter portion 54 and the reduced diameter portion 55 has an inclined shape with a diameter gradually decreasing in the pipe axis direction. However, for example, the connecting portion may be a linear connection portion extending along a radial direction of the second sleeve 105 (extending along a direction orthogonal to the pipe axis direction).
(3) In the above embodiment, as a method for assembling the expansion pipe joint 100, an example has been described in which the first connection step is performed after the second connection step is performed in the fourth step, but the second connection step may be performed after the first connection step is performed.

For example, it is possible to appropriately change the order of the steps in the method for assembling the expansion pipe joint 100, such as performing the first connection step of the fourth step, then performing the third step, and then performing the second connection step of the fourth step.

### LIST OF REFERENCE SIGNS

- 1: First pipe body
- 2: Second pipe body
- 4: Locking ring
- 5: Casing
- 6: Intermediate sleeve
- 8: Temporary fixing jig
- 10: Expansion pipe joint
- 45: Dividing portion
- 48: Assembled body
- 65: Notch
- 80: Main body
- 81: First protrusion
- 82: Second protrusion
- D1: Insertion direction
- D2: Detachment direction

## Claims

1. A method for assembling an expansion pipe joint, a first pipe body and a second pipe body inserted into the first pipe body being connected in a manner as to be relatively movable within a certain range along an axial direction, and a lock ring mounted on an outer peripheral surface of the second pipe body exhibiting a detachment-preventing function, the method comprising:
a temporary fixing step of fitting an assembled body obtained by assembling the lock ring with a diameter increased through elastic deformation to a temporary fixing jig into the first pipe body and holding the lock ring with an increased diameter in a coaxial alignment with the first pipe body; and
a mounting step of inserting the second pipe body into the lock ring with an increased diameter, removing the temporary fixing jig from the lock ring through the insertion movement of the second pipe body, and mounting the lock ring on the outer peripheral surface of the second pipe body.

2. The method for assembling an expansion pipe joint according to claim 1, wherein
the lock ring includes a dividing portion that separates the lock ring in a circumferential direction,
the temporary fixing jig includes a main body capable of being fitted into the first pipe body, and a first protrusion protruding from the main body, and
in the temporary fixing step, the lock ring is held with an increased diameter by inserting the first protrusion into the dividing portion with a gap increased through elastic deformation.

3. The method for assembling an expansion pipe joint according to claim 1, wherein
the temporary fixing jig includes a main body capable of being fitted into the first pipe body, and a second protrusion protruding from the main body, and
in the temporary fixing step, the lock ring is assembled to the temporary fixing jig with the lock ring in contact with the second protrusion.

4. The method for assembling an expansion pipe joint according to claim 1, wherein
in the mounting step, with the lock ring engaged with an engaging portion provided inside the first pipe body in an insertion direction of the second pipe body, the temporary fixing jig is pressed by the second pipe body to be removed from the lock ring.

5. The method for assembling an expansion pipe joint according to any one of claims 1 to 4, wherein
the first pipe body includes a casing having a spherical inner peripheral surface and an intermediate sleeve having a spherical outer peripheral surface fitted to the spherical inner peripheral surface in a relatively slidable manner, and
in the temporary fixing step, the assembled body is fitted into the intermediate sleeve.

6. The method for assembling an expansion pipe joint according to claim 5, wherein
the intermediate sleeve is provided with a notch that allows passage of the lock ring with a radial direction of the lock ring aligned with an axial direction of the intermediate sleeve, and
in the temporary fixing step, the temporary fixing jig is fitted into the notch.

7. A temporary fixing structure for a lock ring, the temporary fixing structure being used to assemble an expansion pipe joint, a first pipe body and a second pipe body inserted into the first pipe body being connected in a manner as to be relatively movable within a certain range along an axial direction, and a lock ring mounted on an outer peripheral surface of the second pipe body exhibiting a detachment-preventing function, wherein
an assembled body obtained by assembling the lock ring with a diameter increased through elastic deformation to a temporary fixing jig is fitted into the first pipe body, and the lock ring with an increased diameter is held in a coaxial alignment with the first pipe body; and
when the second pipe body is inserted into the lock ring with an increased diameter, the temporary fixing jig is removed from the lock ring through the insertion movement of the second pipe body, and the lock ring is mounted on the outer peripheral surface of the second pipe body.

8. The temporary fixing structure for a lock ring according to claim 7, wherein
the lock ring includes a dividing portion that separates the lock ring in a circumferential direction,
the temporary fixing jig includes a main body capable of being fitted into the first pipe body, and a first protrusion protruding from the main body, and
the lock ring is held with an increased diameter by inserting the first protrusion into the dividing portion with a gap increased through elastic deformation.

9. The temporary fixing structure for a lock ring according to claim 7, wherein
the temporary fixing jig includes a main body capable of being fitted into the first pipe body, and a second protrusion protruding from the main body, and
the lock ring is assembled to the temporary fixing jig with the lock ring in contact with the second protrusion.

10. The temporary fixing structure for a lock ring according to claim 7, wherein
an engaging portion is provided inside the first pipe body, the engaging portion facing the lock ring with an increased diameter in an insertion direction of the second pipe body.

11. The temporary fixing structure for a lock ring according to any one of claims 7 to 10, wherein
the first pipe body includes a casing having a spherical inner peripheral surface and an intermediate sleeve having a spherical outer peripheral surface fitted to the spherical inner peripheral surface in a relatively slidable manner, and
the assembled body is fitted into the intermediate sleeve.

12. The temporary fixing structure for a lock ring according to claim 11, wherein
the intermediate sleeve is provided with a notch that allows passage of the lock ring with a radial direction of the lock ring aligned with an axial direction of the intermediate sleeve, and
the temporary fixing jig is fitted into the notch.
